(19) Europäisches Patentamt
European Patent Office
Office européen des brevets

(11) **EP 4 210 401 A1**

(12) **EUROPEAN PATENT APPLICATION**
published in accordance with Art. 153(4) EPC

(43) Date of publication:
**12.07.2023 Bulletin 2023/28**

(21) Application number: **22778424.6**

(22) Date of filing: **25.02.2022**

(51) International Patent Classification (IPC):
**H04W 52/24** (2009.01)

(52) Cooperative Patent Classification (CPC):
**H04W 52/24; H04W 52/38**

(86) International application number:
**PCT/CN2022/078013**

(87) International publication number:
**WO 2022/206239 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.04.2021 CN 202110358332**

(71) Applicant: **Huawei Technologies Co., Ltd.
Shenzhen, Guangdong 518129 (CN)**

(72) Inventors:
• **YU, Jian
Shenzhen, Guangdong 518129 (CN)**
• **LI, Yunbo
Shenzhen, Guangdong 518129 (CN)**
• **GAN, Ming
Shenzhen, Guangdong 518129 (CN)**

(74) Representative: **Körber, Martin Hans
Mitscherlich PartmbB
Patent- und Rechtsanwälte
Sonnenstraße 33
80331 München (DE)**

(54) **SPATIAL REUSE METHOD AND APPARATUS, DEVICE, AND MEDIUM**

(57)     Provided are a spatial reuse method, an apparatus, a device, and a medium. In the method, a first spatial reuse device receives a portion or all of a PSRR PPDU sent by a second spatial reuse device on a first frequency band. The first frequency band includes one or more subbands with a same bandwidth. The first spatial reuse device determines, based on a value of a spatial reuse parameter SRP at a granularity of the bandwidth and a received power level RPL of the PSRR PPDU at a granularity of the bandwidth, a reference transmit power for sending a PSRT PPDU on a second frequency band. The second frequency band includes one or more subbands with the bandwidth. The second frequency band and the first frequency band at least partially overlap. The RPL of the PSRR PPDU at the granularity of the bandwidth is determined based on one or more of the following: one or more subbands that are in the first frequency band and that are occupied by a portion or all of the PSRR PPDU received by the first spatial reuse device; or a non-punctured subband in the first frequency band or the second frequency band. This reduces interference to reception of a spatial reuse device, and improves system efficiency.

FIG. 8

EP 4 210 401 A1

**Description**

**TECHNICAL FIELD**

This disclosure relates to the wireless local area network field, and more specifically, to a spatial reuse method, an apparatus, and a medium.

**BACKGROUND**

Wireless local area network (Wireless Local Area Network, WLAN) standards have been developed for many generations, including 802.11a/b/g, 802.11n, 802.11ac, 802.11ax, and 802.11be that is being discussed. The 802.11n standard is referred to as high throughput (High Throughput, HT), the 802.11ac standard is referred to as very high throughput (Very High Throughput, VHT), the 802.11ax standard is referred to as high efficiency (High Efficiency, HE), and the 802.11be standard is referred to as extremely high throughput (Extremely High Throughput, EHT).

802.11ax WLAN devices, for example, an access point and a station, support only half-duplex transmission. In other words, on a same spectrum bandwidth or channel, only one device can send information, and other devices can only receive a signal but cannot send a signal. This avoids interference to the current sending device. However, with increasing density of WLAN devices, it is more common that a basic service set (basic service set, BSS) overlaps with another BSS. In other words, an overlapping basic service set (Overlapping BSS, OBSS) becomes more common. If a conventional method is used, transmission efficiency is very low. In this case, the 802.11ax proposes a spatial reuse (Spatial Reuse) method. Through adaptive adjustment of a transmit power, devices in the overlapping basic service set can perform transmission at the same time. This improves transmission efficiency. However, the 802.11ax spatial reuse method has a defect of large interference between devices and low system efficiency.

**SUMMARY**

This disclosure provides a spatial reuse solution.

A first aspect of this disclosure provides a spatial reuse method. In the method, a first spatial reuse device receives a portion or all of a PSRR PPDU sent by a second spatial reuse device on a first frequency band. The first frequency band includes one or more subbands with a same bandwidth. The first spatial reuse device determines, based on a value of a spatial reuse parameter (SRP) at a granularity of the bandwidth and a received power level (RPL) of the PSRR PPDU at a granularity of the bandwidth, a reference transmit power for sending a PSRT PPDU on a second frequency band. The second frequency band includes one or more subbands with the bandwidth, and the second frequency band and the first frequency band at least partially overlap. The RPL of the PSRR PPDU at the granularity of the bandwidth is determined based on one or more of the following: one or more subbands that are in the first frequency band and that are occupied by the portion or all of the PSRR PPDU received by the first spatial reuse device; or a non-punctured subband in the first frequency band or the second frequency band.

In some implementations, the reference transmit power is determined for the entire second frequency band.

In some implementations, the RPL at the granularity of the bandwidth is determined based on an overlapping subband between the second frequency band and the one or more subbands that are in the first frequency band and that are occupied by the portion or all of the PSRR PPDU received by the first spatial reuse device.

In some implementations, the RPL at the granularity of the bandwidth is determined based on one of the following: a bandwidth of a non-punctured subband in the one or more subbands that are in the first frequency band and that are occupied by the portion or all of the PSRR PPDU received by the first spatial reuse device; or a bandwidth of a non-punctured subband in an overlapping subband between the second frequency band and the one or more subbands that are in the first frequency band and that are occupied by the portion or all of the PSRR PPDU received by the first spatial reuse device.

In some implementations, the reference transmit power is determined based on one of the following: a bandwidth of the non-punctured subband in the second frequency band; or a bandwidth of a non-punctured subband in an overlapping subband between the second frequency band and the one or more subbands that are in the first frequency band and that are occupied by the portion or all of the PSRR PPDU received by the first spatial reuse device.

In some implementations, the first spatial reuse device determines the non-punctured subband in the first frequency band based on at least one of the following: puncturing indication information included in a preamble in the received PSRR PPDU; puncturing indication information included in the PSRR PPDU, where the PSRR PPDU is a non-high throughput duplicate PPDU; or puncturing indication information included in a management frame of a basic service set BSS in which the second spatial reuse device is located, where the management frame includes at least one of the following frames: a beacon frame, an association response frame, a probe response frame, a neighbor report frame, or a reduced neighbor report frame.

In some implementations, the first spatial reuse device determines to puncture the PSRT PPDU. The first spatial reuse device adjusts the reference transmit power based on a predetermined offset.

In some implementations, the value of the SRP at the granularity of the bandwidth is adjusted by the second spatial reuse device for a punctured PSRR PPDU based on a predetermined offset.

In some implementations, the first frequency band includes a plurality of subbands. The value of the SRP at the granularity of the bandwidth is a smallest value in a plurality of values of the SRP for the plurality of subbands.

In some implementations, the determining a reference transmit power for sending a PSRT PPDU on a second frequency band includes: The first spatial reuse device determines, based on a value of the SRP for one subband in the first frequency band and the RPL of the PSRR PPDU in the subband, the reference transmit power for sending the PSRT PPDU on the subband, where the subband in the first frequency band is included in the second frequency band.

In some implementations, the first spatial reuse device determines, for a punctured subband in an overlapping subband between the second frequency band and the first frequency band, not to allow sending the PSRT PPDU on the punctured subband; or the first spatial reuse device determines that a reference transmit power on the punctured subband is less than a predefined maximum transmit power.

In some implementations, the first spatial reuse device determines, for a punctured subband in an overlapping subband between the second frequency band and the first frequency band, a reference transmit power on the punctured subband based on one or more reference transmit powers determined for one or more non-punctured subbands in the overlapping subband between the second frequency band and the first frequency band.

In some implementations, the determining a reference transmit power on the punctured subband includes: The first spatial reuse device determines the reference transmit power on the punctured subband as a smallest reference transmit power in the plurality of reference transmit powers determined for the plurality of non-punctured subbands or as an average power of the plurality of reference transmit powers.

In some implementations, the first spatial reuse device determines, for a punctured subband in an overlapping subband between the second frequency band and the first frequency band, a reference transmit power on the punctured subband based on a value of the SRP for the punctured subband.

A second aspect of this disclosure provides a spatial reuse method. In the method, a second spatial reuse device determines, for a to-be-punctured subband in a first frequency band that is used for sending a physical layer protocol data unit (PPDU) and that includes a plurality of subbands with a same bandwidth, a corresponding value of a spatial reuse parameter SRP through one of the following operations: adjusting the value of the SRP based on a predetermined offset; and setting the value of the SRP to a first value, to indicate to another spatial reuse device that transmission of the PPDU on the to-be-punctured subband is prohibited; or setting the value of the SRP to a second value, to indicate to another spatial reuse device that transmission on the to-be-punctured subband is allowed. Then, the second spatial reuse device sends a punctured PPDU on a non-punctured subband in the first frequency band, where a trigger frame carried in the PPDU includes the determined value of the SRP.

A third aspect of this disclosure provides a communication apparatus. The apparatus includes a receiving module and a first determining module. The receiving module is configured to receive, by a first spatial reuse device, a portion or all of a PSRR PPDU sent by a second spatial reuse device on a first frequency band, where the first frequency band includes one or more subbands with a same bandwidth. The first determining module is configured to determine, by the first spatial reuse device based on a value of a spatial reuse parameter SRP at a granularity of the bandwidth and a received power level RPL of the PSRR PPDU at a granularity of the bandwidth, a reference transmit power for sending a PSRT PPDU on a second frequency band. The RPL of the PSRR PPDU at the granularity of the bandwidth is determined based on one or more of the following: one or more subbands that are in the first frequency band and that are occupied by the portion or all of the received PSRR PPDU; or a non-punctured subband in the first frequency band or the second frequency band.

In some implementations, the reference transmit power is determined for the entire second frequency band.

In some implementations, the RPL at the granularity of the bandwidth is determined based on an overlapping subband between the second frequency band and the one or more subbands that are in the first frequency band and that are occupied by the portion or all of the received PSRR PPDU.

In some implementations, the RPL at the granularity of the bandwidth is determined based on one of the following: a bandwidth of a non-punctured subband in the one or more subbands that are in the first frequency band and that are occupied by the portion or all of the received PSRR PPDU; or a bandwidth of a non-punctured subband in an overlapping subband between the second frequency band and the one or more subbands that are in the first frequency band and that are occupied by the portion or all of the received PSRR PPDU.

In some implementations, the reference transmit power is determined based on one of the following: a bandwidth of the non-punctured subband in the second frequency band; or a bandwidth of a non-punctured subband in an overlapping subband between the second frequency band and the one or more subbands that are in the first frequency band and that are occupied by the portion or all of the received PSRR PPDU.

In some implementations, the apparatus further includes a second determining module. The second determining module is configured to determine the non-punctured subband in the first frequency band based on at least one of the following: puncturing indication information included in a preamble in the received PSRR PPDU; puncturing indication information included in the PSRR PPDU, where the PSRR PPDU is a non-high throughput duplicate PPDU; or puncturing indication information included in a management frame of a basic service set BSS in which the second spatial reuse device is located, where the management frame includes at least one of the following frames: a beacon frame, an association response frame, a probe response frame, a neighbor report frame, or a reduced neighbor report frame.

In some implementations, the apparatus further includes a third determining module, configured to determine, by the first spatial reuse device, to puncture the PSRT PPDU. The apparatus further includes an adjustment module, configured to adjust, by the first spatial reuse device, the reference transmit power based on a predetermined offset.

In some implementations, the value of the SRP at the granularity of the bandwidth is adjusted by the second spatial reuse device for a punctured PSRR PPDU based on a predetermined offset.

In some implementations, the first frequency band includes a plurality of subbands. The value of the SRP at the granularity of the bandwidth is a smallest value in a plurality of values of the SRP for the plurality of subbands.

In some implementations, the first determining module is configured to determine, by the first spatial reuse device based on a value of the SRP for one subband in the first frequency band and the RPL of the PSRR PPDU in the subband, the reference transmit power for sending the PSRT PPDU on the subband, where the subband in the first frequency band is included in the second frequency band.

In some implementations, the first determining module is configured to: determine, by the first spatial reuse device for a punctured subband in an overlapping subband between the second frequency band and the first frequency band, not to allow sending the PSRT PPDU on the punctured subband; or determine, by the first spatial reuse device, that a reference transmit power on the punctured subband is less than a predefined maximum transmit power.

In some implementations, the first determining module is configured to determine, by the first spatial reuse device for a punctured subband in an overlapping subband between the second frequency band and the first frequency band, a reference transmit power on the punctured subband based on one or more reference transmit powers determined for one or more non-punctured subbands in the overlapping subband between the second frequency band and the first frequency band.

In some implementations, the first determining module is configured to determine, by the first spatial reuse device, the reference transmit power on the punctured subband as a smallest reference transmit power in the plurality of reference transmit powers determined for the plurality of non-punctured subbands or as an average power of the plurality of reference transmit powers.

In some implementations, the first determining module is configured to determine, by the first spatial reuse device for a punctured subband in an overlapping subband between the second frequency band and the first frequency band, a reference transmit power on the punctured subband based on a value of the SRP for the punctured subband.

A fourth aspect of this disclosure provides a communication apparatus. The communication apparatus includes a fourth determining module and a sending module. The fourth determining module is configured to determine, for a to-be-punctured subband in a first frequency band that is used for sending a physical layer protocol data unit PPDU and that includes a plurality of subbands with a same bandwidth, a corresponding value of a spatial reuse parameter SRP through one of the following operations: adjusting the value of the SRP based on a predetermined offset; and setting the value of the SRP to a first value, to indicate to another spatial reuse device that transmission of the PPDU on the to-be-punctured subband is prohibited; or setting the value of the SRP to a second value, to indicate to another spatial reuse device that transmission on the to-be-punctured subband is allowed. The sending module is configured to send a punctured PPDU on a non-punctured subband in the first frequency band, where a trigger frame carried in the PPDU includes the determined value of the SRP.

A fifth aspect of this disclosure provides a communication device. The communication device includes a processor. The processor is coupled to a memory. The memory stores instructions. When the instructions are executed by the processor, the method according to the first aspect or the second aspect of this disclosure is performed.

A sixth aspect of this disclosure provides a computer-readable storage medium. A program is stored in the computer-readable storage medium. When at least part of the program is executed by a processor in a device, the device performs the method according to the first aspect or the second aspect of this disclosure.

It should be understood that content described in the summary part is not intended to limit a key or important feature of this disclosure, and is not intended to limit the scope of this disclosure. The following descriptions facilitate understanding of other features of this disclosure.

## BRIEF DESCRIPTION OF DRAWINGS

The foregoing and other features, advantages, and aspects of embodiments of this disclosure become more obvious with reference to the accompanying drawings and with reference to the following detailed descriptions. In the accompanying drawings, same or similar reference numerals represent same or similar elements.

FIG. 1 is a schematic diagram of an OBSS formed by partially overlapping one BSS and another BSS;

FIG. 2 is a schematic diagram of a frame format in uplink scheduling transmission based on a trigger frame in the 802.11ax standard;

FIG. 3 is a schematic diagram of a frame format of the trigger frame shown in FIG. 2;

FIG. 4 is a schematic diagram of frame formats of a common information field and a user information field in a trigger frame in the 802.11ax;

FIG. 5 is a schematic flowchart of spatial reuse transmission in the 802.11ax;

FIG. 6 illustrates an example environment in which embodiments of this disclosure may be implemented;

FIG. 7A is a schematic diagram of a spatial reuse transmission process according to some embodiments of this disclosure;

FIG. 7B is a schematic diagram of a spatial reuse transmission process according to some other embodiments of this disclosure;

FIG. 7C is a schematic diagram of a spatial reuse transmission process according to some other embodiments of this disclosure;

FIG. 7D is a schematic diagram of frame formats of some subfields of a common information field and a user information field that are included in a trigger frame according to some embodiments of this disclosure;

FIG. 8 is a flowchart of a spatial reuse method according to some embodiments of this disclosure;

FIG. 9 is a schematic diagram of channel division of a bandwidth of 80/160/320 MHz in the 6 GHz band according to an embodiment of this disclosure;

FIG. 10 is a flowchart of a spatial reuse method according to some other embodiments of this disclosure;

FIG. 11 is a schematic diagram of an apparatus according to some embodiments of this disclosure;

FIG. 12 is a schematic diagram of an apparatus according to some other embodiments of this disclosure; and

FIG. 13 is a block diagram of a device for implementing some embodiments of this disclosure.

**DESCRIPTION OF EMBODIMENTS**

The following describes embodiments of this disclosure in detail with reference to the accompanying drawings. Although some embodiments of this disclosure are shown in the accompanying drawings, it should be understood that this disclosure may be implemented in various forms, and should not be construed as being limited to the embodiments described herein. On the contrary, these embodiments are provided so that this disclosure will be thoroughly and completely understood. It should be understood that the accompanying drawings and embodiments of this disclosure are merely used as examples, but are not intended to limit the protection scope of this disclosure.

The term "include" and variants thereof used herein indicate open inclusion, that is, "include but is not limited to". The term "based on" means "at least partially based on". The term "one embodiment" represents "at least one embodiment", and the term "another embodiment" represents "at least one other embodiment". Related definitions of other terms are provided in the following descriptions.

It should be understood that, although the terms "first", "second", and the like may be used to describe various elements in this specification, the elements should not be limited by these terms. These terms are used only to distinguish one element from another. As used in this specification, the term "and/or" includes any and all combinations of one or more listed terms.

The term "access point" or "AP" used herein refers to any appropriate device capable of enabling a user terminal to access a required service. Examples of the AP include a router. The term "station" or "STA" used herein refers to a user terminal that can access a required service through an access point (Access Point, AP). Examples of the station (Station, STA) include a personal computer, a tablet computer, a personal digital assistant (PDA), and a mobile phone.

A WLAN device such as an AP and a STA operates in an unlicensed spectrum, and obtains, by contending for a channel, an opportunity of transmitting a physical layer protocol data unit (PHY Protocol Data Unit, PPDU) or another packet or data packet. As mentioned above, with increasing density of WLAN devices, it is more common that a basic service set (Basic Service Set, BSS) falls in a basic service area of another BSS and an overlapping basic service set (Overlapping BSS, OBSS) is formed. In this case, the 802.11ax proposes a spatial reuse (Spatial Reuse) method. Through adaptive adjustment of a transmit power, devices in the overlapping basic service set can perform transmission at the same time.

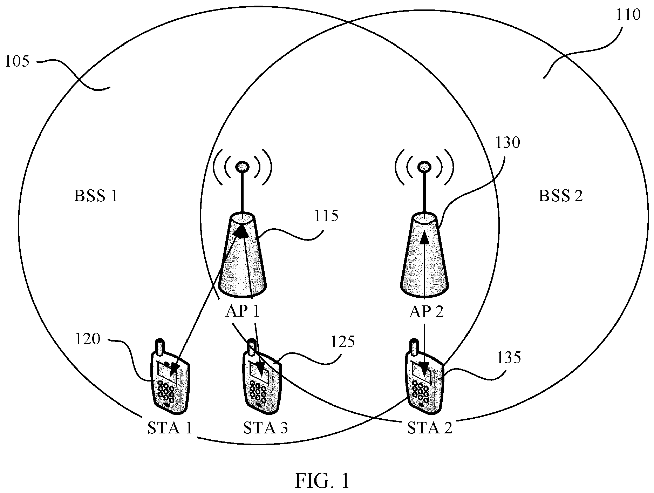

FIG. 1 is a schematic diagram of an OBSS formed by partially overlapping one BSS and another BSS.

The overlapping basic service set (Overlapping BSS, OBSS) is described first. If a basic service set (BSS) unassociated with a station and a BSS associated with the station operates on a same frequency band (also referred to as a channel), and the unassociated BSS is (partially or entirely) in a basic service area of the associated BSS, the unassociated BSS is referred to as an overlapping basic service set (OBSS) of the station. The basic service area is an area that includes members of the basic service set, and may include members of another BSS.

In an example shown in FIG. 1, a BSS 105 (denoted as a BSS 1) and a BSS 110 (denoted as a BSS 2) partially overlap and are an OBSS for each other. In FIG. 1, an AP 115 (denoted as an AP 1), a STA 120 (denoted as a STA 1), and a STA 125 (denoted as a STA 3) belong to the BSS 105, and an AP 130 (denoted as an AP 2) and a STA 135 (denoted as a STA 2) belong to the BSS 110.

Because a basic service area of the BSS 1 and a basic service area of the BSS 2 partially overlap, as shown in FIG. 1, when the AP 1 and the STA 1 that are located in the BSS 1 perform data transmission, the AP 2 located in the BSS 2 may receive information sent by the AP 1 and the STA 1. In addition, the AP 2 may further receive information sent by the STA 3. In this case, the AP 2 may adaptively adjust, based on a spatial reuse parameter transferred by the AP 1, a power at which the AP 2 sends a PPDU to the STA 2, to implement simultaneous transmission in the OBSS. Likewise, when the AP 2 and the STA 2 that are located in the BSS 2 perform data transmission, the AP 1 located in the BSS 1 may receive information sent by the AP 2. In this case, the AP 1 may also adaptively adjust, based on a spatial reuse parameter transferred by the AP 2, a power at which the AP 1 sends a PPDU to the STA 1 and/or the STA 3, to implement simultaneous transmission in the OBSS.

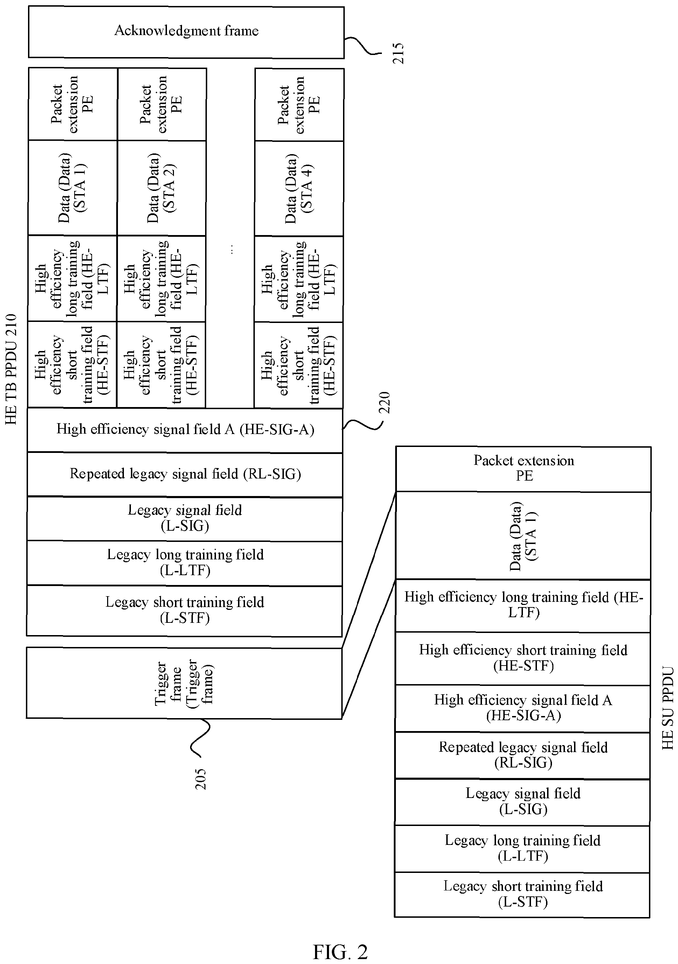

The AP 1 or the AP 2 may transmit the spatial reuse parameter by using a trigger frame in an uplink scheduling transmission process based on a trigger frame. As shown in FIG. 2 to FIG. 4, the following describes the uplink scheduling transmission process based on the trigger frame.

FIG. 2 is a schematic diagram of an example frame format in uplink scheduling transmission based on a trigger frame in the 802.11ax standard.

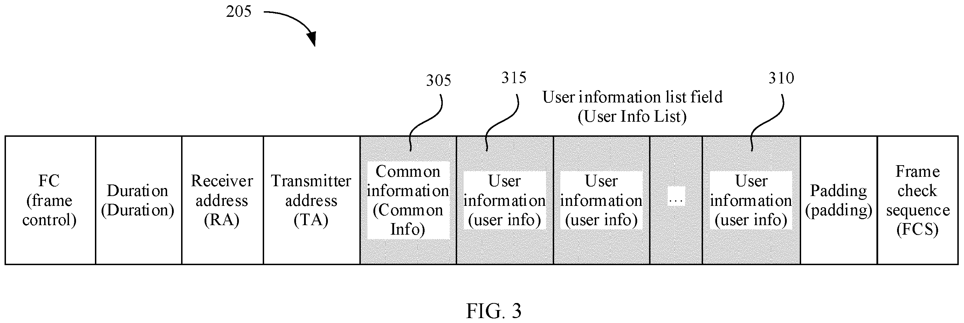

As shown in FIG. 2, in the uplink scheduling transmission based on the trigger frame, an AP 1 may first send a trigger frame 205, where the trigger frame 205 includes resource scheduling and another parameter used by one or more STAs for sending an uplink PPDU. An example format of the trigger frame 205 is shown in FIG. 3. As shown in FIG. 3, the trigger frame 205 includes a common information (common info) field 305 and a user information list (user info list) field 310. The common information field 305 includes common information that all STAs need to read. The user information list field 310 includes one or more user information (user info) fields 315 that include information that a corresponding STA needs to read.

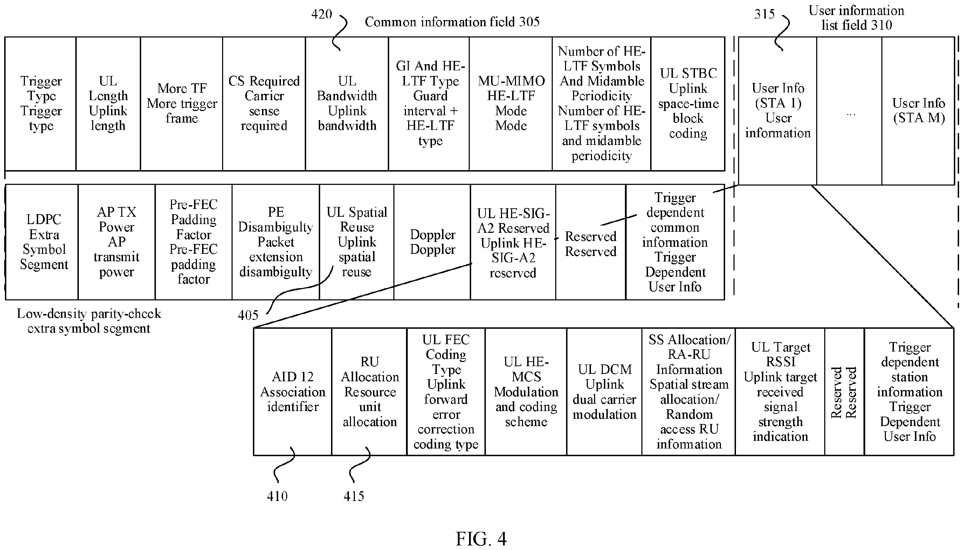

FIG. 4 is a schematic diagram of frame formats of the common information field 305 and the user information field 315 in the trigger frame 205.

As shown in FIG. 4, the common information field 305 includes an uplink spatial reuse (UL Spatial Reuse) subfield 405. In the user information field 315, an association identifier 12 (association identifier 12, AID 12) subfield 410 indicates an association identifier of a STA, and a resource unit allocation (RU Allocation) subfield 415 indicates a location of a specific resource unit (Resource Unit, RU) allocated to the STA (the STA indicated by the AID 12).

After receiving the trigger frame 205, the STA 1 or the STA 3 or both parse, from the trigger frame 205, the user information field 315 that matches an AID of the STA 1 and/or the STA 3, and then send a high efficiency trigger-based data packet, for example, a high efficiency trigger-based physical layer protocol data unit (High Efficiency Trigger Based Physical layer Protocol Data Unit, HE TB PPDU) 210, on the RU that is indicated by the resource unit allocation subfield 415 and that is in the user information field 315, as shown in FIG. 2. The STA 1 and/or the STA 3 may further copy the UL spatial reuse field 405 in the received trigger frame 205 to the high efficiency signal field A (High Efficiency Signal Field A, HE-SIG-A) field 220 in the HE TB PPDU 210.

After receiving the HE TB PPDU 210, the AP 1 replies an acknowledgment frame 215 to the STA 1 and/or the STA 3, to acknowledge that the AP 1 has received the HE TB PPDU 210.

For meanings and functions of fields that may be included in the HE TB PPDU 210 shown in FIG. 2, refer to the following Table 1.

**Table 1**

| Acronyms and Abbreviations | Short for | Item | Description |
|---|---|---|---|
| L-STF | Legacy Short Training Field | Legacy short training field | For PPDU discovery, coarse synchronization, and automatic gain control |
| L-LTF | Legacy Long Training Field | Legacy long training field | For fine synchronization and channel estimation |
| L-SIG | Legacy Signal Field A | Legacy signal field | Carrying signaling information related to a PPDU length, to ensure coexistence |
| HE-SIG-A | High Efficiency Signal Field A | High efficiency signal field A | Carrying signaling for demodulating subsequent data |

(continued)

| Acronyms and Abbreviations | Short for | Item | Description |
|---|---|---|---|
| HE-STF | High Efficiency Short Training Field | High efficiency short training field | For automatic gain control of a subsequent field |
| HE-LTF | High Efficiency Long Training Field | High efficiency long training field | For channel estimation |
| Data | | Data | Carrying data information |
| PE | Packet Extension | Packet extension | Helping a receive end obtain more processing time |

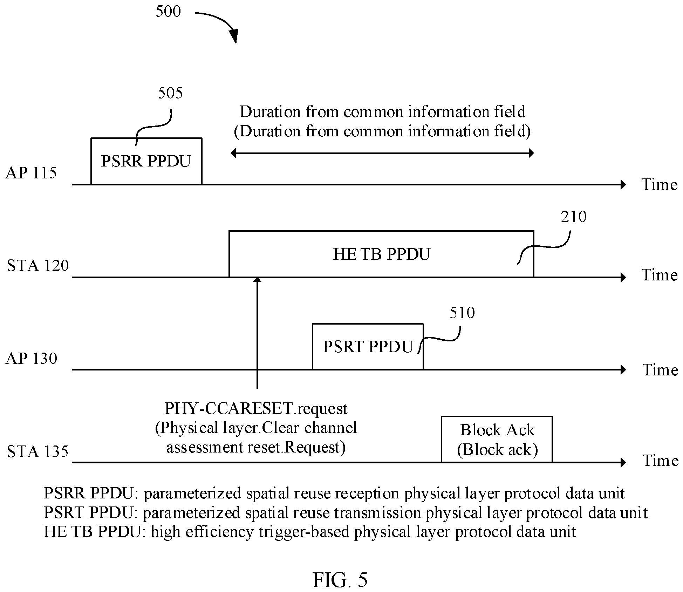

The trigger frame 205 sent by the AP 1 can be received by the STA 1 or the STA 3 associated with the AP 1 and may also be received by the AP 2 in the OBSS. Based on information in the uplink spatial reuse subfield 405 in the trigger frame 205, the AP 2 and the AP 1 may perform spatial reuse transmission in the OBSS. As shown in FIG. 5, the following describes an example process of spatial reuse transmission of the AP 1 and the AP 2.

FIG. 5 is a schematic flowchart of an example spatial reuse transmission process 500 in the 802.11ax.

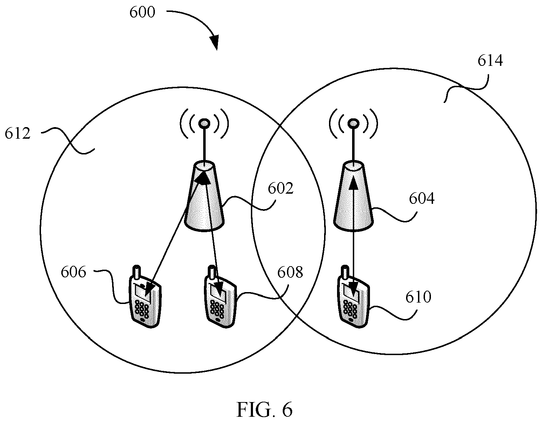

First, the AP 1 (namely, the AP 115) sends a parameterized spatial reuse reception (Parameterized Spatial Reuse Reception, PSRR) PPDU 505 including the trigger frame 205 to the STA 1. As shown in FIG. 6, the common information field 305 in the trigger frame 205 includes the uplink spatial reuse (UL Spatial Reuse) field 405 that carries an uplink spatial reuse parameter (Uplink Spatial Reuse Parameter, UL SRP). A value of the UL SRP is a sum of a transmit power of the AP 1 and a maximum interference power that the AP 1 can accept. When an operating frequency band of the AP 115 has different bandwidths (bandwidth), values of a UL SRP 1 to a UL SRP 4 are set as follows:

- When the bandwidth is 20 MHz, UL SRP 1 = UL SRP 2 = UL SRP 3 = UL SRP 4 indicates that values of UL SRPs on the 20 MHz bandwidth are equal.
- When the bandwidth is 40 MHz, UL SRP 1 = UL SRP 3 indicates a first 20 MHz subband (subband) that is also referred to as a subchannel (subchannel) or a subblock (subblock), and UL SRP 2 = UL SRP 4 indicates a second 20 MHz subband. To avoid confusion caused by channel allocation, when the bandwidth is 2.4 GHz, UL SRP 1=UL SRP 2.
- When the bandwidth is 80 MHz, four UL SRPs respectively indicate four 20 MHz subbands.
- When the bandwidth is 160 MHz, four UL SRPs each indicate any 20 MHz subband in each of four 40 MHz subbands, where values of two 20 MHz subbands in a 40 MHz subband are the same.

The bandwidth is indicated by an uplink bandwidth (Uplink Bandwidth, UL BW) field 420 of the common information field 305 in the trigger frame 205 shown in FIG. 4.

The value of the UL SRP is determined by the AP 1, and is the sum of the transmit power of the AP 1 and the maximum interference power that the AP 1 can accept.

The STA 1 copies the UL spatial reuse field 405 in the received trigger frame 205 to the HE-SIG-A field 220 in the to-be-sent HE TB PPDU 210, as shown in FIG. 2. In addition, the AP 2 also receives the trigger frame 205 sent by the AP 1. After receiving the HE TB PPDU 210 (determining that the STA 1 indeed sends the HE TB PPDU 210), the AP 2 calculates, based on a received power level (Received Power Level, RPL) of the PSRR PPDU 505, the values of the four UL SRPs 1 to 4, and/or values of four SRPs 1 to 4 in the HE TB PPDU, a power at which the AP 2 sends a parameterized spatial reuse transmission (Parameterized Spatial Reuse Transmission, PSRT) PPDU. The transmit power needs to satisfy the following formula:

$$\text{Transmit power at which the AP 2 sends the PSRT PPDU} \leq \text{SRP} - \text{RPL, Formula (A)}$$

Then, after detecting that the HE TB PPDU 210 is sent, the AP 2 sends the PSRT PPDU 510 based on the power calculated according to the foregoing Formula (A).

In the foregoing formula,

RPL indicates a power on a frequency band of the PSRR PPDU;

the transmit power at which the AP 2 sends the PSRT PPDU is normalized to 20 MHz; and

SRP: If the bandwidth of the HE TB PPDU is less than 160 MHz, the bandwidth is normalized to 20 MHz. If the bandwidth of the HE TB PPDU is equal to 160 MHz, the bandwidth is normalized to 40 MHz.

The inventor finds through research that the foregoing 802. 11ax spatial reuse transmission method does not specifically consider transmit power normalization, and does not consider bandwidth mismatch of the PSRT PPDU and the PSRR PPDU either. In addition, the method does not consider power normalization in the presence of a punctured preamble of the PSRT PPDU and/or the PSRR PPDU. Consequently, the transmit power calculated by the AP is inaccurate, interference between APs is further caused, and a system throughput is reduced.

Therefore, an embodiment of this disclosure provides an improved spatial reuse mechanism. According to the mechanism, in a spatial reuse transmission process of two devices (separately referred to as a first spatial reuse device and a second spatial reuse device), when determining a transmit power of a PSRT PPDU on an operating frequency band of the first spatial reuse device, the first spatial reuse device normalizes a value of an SRP and a received power level (RPL) of a PSRR PPDU to a bandwidth of a subband. Specifically, after receiving the PSRR PPDU sent by the second spatial reuse device on the operating frequency band (referred to as a first frequency band that includes one or more subbands with a same bandwidth) of the second spatial reuse device, the first spatial reuse device determines, based on the value of the SRP at a granularity of the bandwidth and the received power level (RPL) of the PSRR PPDU at a granularity of the bandwidth, a reference transmit power for sending the PSRT PPDU on an operating frequency band (referred to as a second frequency band that also includes one or more subbands with the bandwidth) of the first spatial reuse device.

In addition, the first spatial reuse device determines, based on a non-punctured subband in the first frequency band or the second frequency band and/or one or more subbands that are in the first frequency band and that are occupied by a portion or all of the PSRR PPDU received by the first spatial reuse device, the RPL of the PSRR PPDU at the granularity of the bandwidth. In this way, when calculating the transmit power of the PSRT PPDU, the first spatial reuse device may consider bandwidth matching and/or puncturing of the PSRT PPDU and the PSRR PPDU.

In this manner, when calculating the transmit power of the PSRT PPDU, the first spatial reuse device may consider both bandwidth normalization and bandwidth matching and/or puncturing of the PSRT PPDU and the PSRR PPDU. This spatial reuse mechanism improves accuracy of calculating the transmit power of the PSRT PPDU, reduces interference to reception of the spatial reuse device, and improves system efficiency.

FIG. 6 illustrates an example environment 600 in which embodiments of this disclosure may be implemented.

As shown in FIG. 6, the environment 600 includes two spatial reuse devices: a first spatial reuse device 602 and a second spatial reuse device 604. In this example, both the first spatial reuse device 602 and the second spatial reuse device 604 are implemented as an access point (AP). The environment 600 further includes a STA 606, a STA 608, and a STA 610. The STA 606 and the STA 608 may communicate with the first spatial reuse device 602, and the STA 610 may communicate with the second spatial reuse device 604. The first spatial reuse device 602 and the second spatial reuse device 604 may communicate with the STA 606, the STA 608, and the STA 610 in a wireless manner. The communication may comply with any appropriate communication technology and corresponding communication standards. As shown in FIG. 6, the first spatial reuse device 602, the STA 606, and the STA 608 belong to one BSS 612, and the second spatial reuse device 604 and the STA 610 belong to another BSS 614. The two BSSs 612 and 614 are OBSSs. In some embodiments, in the BSS 612, only one STA may communicate with the first spatial reuse device 602. In the BSS 614, a plurality of STAs may communicate with the second spatial reuse device 604.

When the second spatial reuse device 604 located in the BSS 614 may perform data transmission with the STA 610, the first spatial reuse device 602 located in the BSS 612 may receive information sent by the second spatial reuse device 604. On the contrary, the second spatial reuse device 604 may also receive information sent by the first spatial reuse device 602. The first spatial reuse device 602 may adaptively adjust, based on a spatial reuse parameter transferred by the second spatial reuse device 604, a power at which the first spatial reuse device 602 sends a PPDU to the STA 608. Likewise, the second spatial reuse device 604 may also adaptively adjust, based on a spatial reuse parameter transferred by the first spatial reuse device 602, a power at which the second spatial reuse device 604 sends a PPDU to the STA 610.

It should be understood that the first spatial reuse device 602 and the second spatial reuse device 604 are implemented as an access point (AP), which is merely an example rather than a limitation. The first spatial reuse device 602 and the second spatial reuse device 604 in this disclosure are not limited to the AP in the example, but may be various other devices suitable for spatial reuse transmission depending on specific implementation and scenarios, including but not limited to an AP and a STA such as a communication server, a router, a switch, a bridge, a computer, and a mobile phone. In addition, FIG. 6 shows only an example in which a device that communicates with the first spatial reuse device 602 and the second spatial reuse device 604 is a STA. This disclosure is not limited thereto, but depends on specific implementation and scenarios. The device may be another communication device, including but not limited to an AP and a STA such as a communication server, a router, a switch, a bridge, a computer, and a mobile phone.

It should also be understood that the environment 600 shows two spatial reuse devices and three devices communicating with them, namely, the STA 606, the STA 608, and the STA 610, for illustrative purposes only. However, embodiments of this disclosure may be applied to other quantities of spatial reuse devices, and these spatial reuse devices may communicate with any appropriate quantity of other devices.

According to some embodiments of this disclosure, after determining to perform spatial reuse transmission with the second spatial reuse device 604, the first spatial reuse device 602 determines, based on a value of an SRP normalized to a bandwidth of a subband in an operating frequency band and an RPL of a PSRR PPDU from the second spatial reuse device 604, a transmit power for sending a PSRT PPDU.

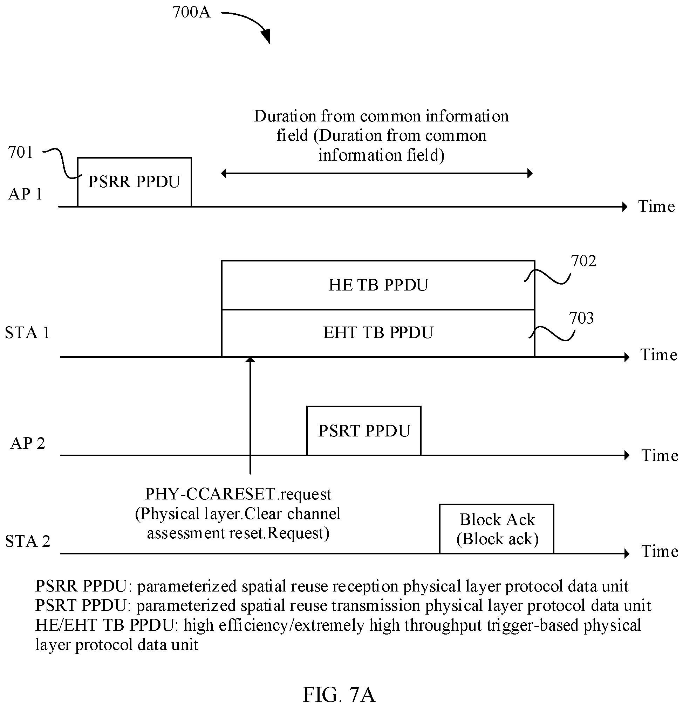

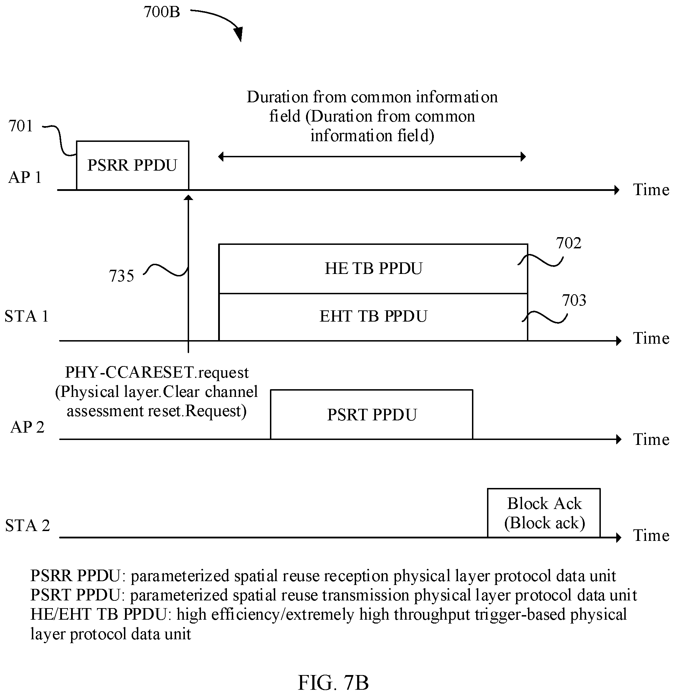

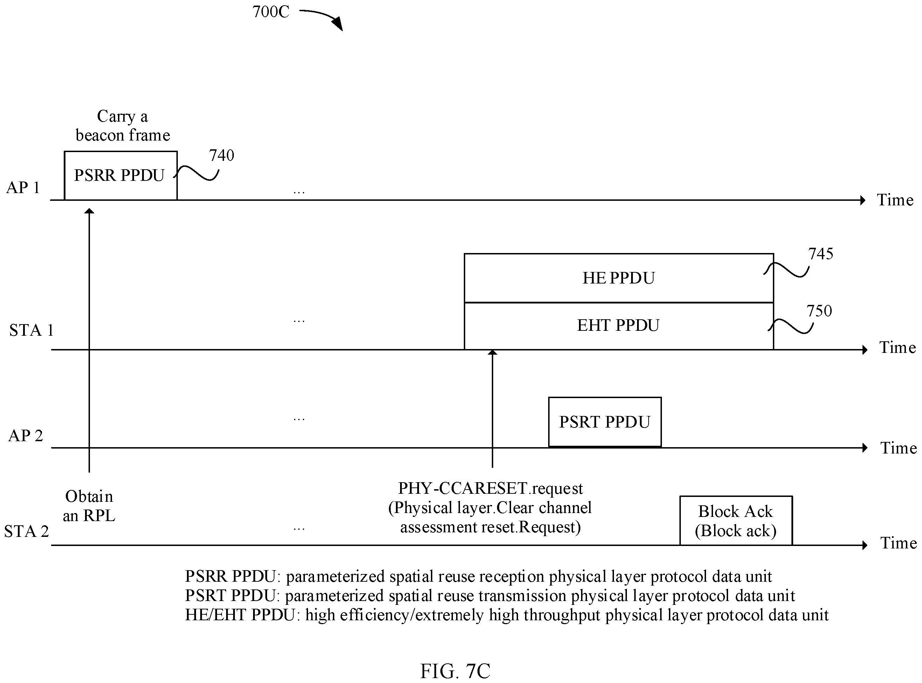

The following describes an example spatial reuse transmission process between the first spatial reuse device 602 and the second spatial reuse device 604 with reference to FIG. 7A, FIG. 7B, and FIG. 7C. In the examples shown in FIG. 7A, FIG. 7B, and FIG. 7C, both the first spatial reuse device 602 and the second spatial reuse device 604 are implemented as APs separately denoted as an AP 2 and an AP 1.

FIG. 7A is a schematic diagram of a spatial reuse transmission process 700A according to some embodiments of this disclosure.

As shown in FIG. 7A, according to the 802.11be, the AP 1 (as an example of the second spatial reuse device 604) sends a PSRR PPDU 701 carrying a trigger frame to a STA 1. In some embodiments, the PSRR PPDU 701 may be any PPDU (for example, a PSRR PPDU carrying a management frame), and then the AP 2 obtains an RPL by using only the PSRR PPDU. A value of an SRP is obtained by using any PPDU (for example, an HE/EHT TB PPDU) that carries an SRP and that is sent by the STA 1. Further description is provided below with reference to FIG. 7C.

A main difference between the process 700 and the process 500 lies in that the PSRR PPDU 701 carrying the trigger frame 205 may schedule two types of PPDUs: an HE TB PPDU and/or an EHT TB PPDU of the STA 1. The AP 2 (as an example of the first spatial reuse device 602) may perform spatial reuse based on the HE TB PPDU and/or the EHT TB PPDU. In some embodiments, the AP 2 may not receive (or not based on) the HE TB PPDU and/or the EHT TB PPDU, but directly perform spatial reuse by using the PSRR PPDU carrying the trigger frame. Further description is provided below with reference to FIG. 7B.

As shown in FIG. 7A, after receiving a trigger frame in which a common information field includes an uplink spatial reuse (UL Spatial Reuse) field and/or a special user field includes an EHT uplink spatial reuse field, the STA 1 sends an HE TB PPDU 702 and/or an EHT TB PPDU 703. A subsequent process in which the AP 2 sends the PSRT PPDU is similar to the spatial reuse transmission process 500 in the 802.11ax. Details are not described herein again.

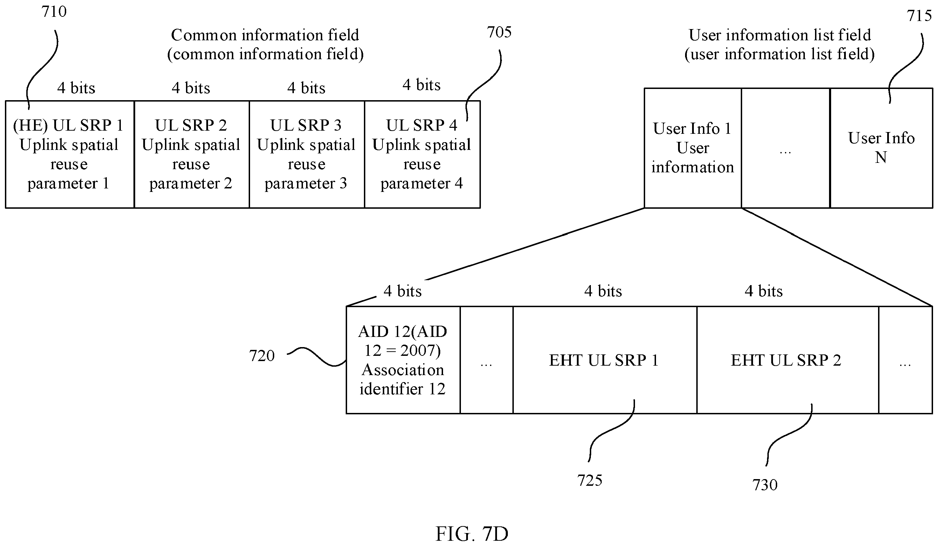

An example of indicating an SPR by using a trigger frame is described below with reference to FIG. 7D.

FIG. 7D is a schematic diagram of frame formats of some subfields of a common information field and a user information field that are included in a trigger frame according to some embodiments of this disclosure.

As shown in FIG. 7D, the common information field 705 in the trigger frame includes four uplink parameterized spatial reuse (Uplink Parameterized Spatial Reuse, UL PSR) fields 710 whose lengths are all 4 bits. In the frame format shown in FIG. 7D, a user information list field 715 further includes a special user information field, namely, an association identifier 12 (AID 12) field 720. The field 720 indicates a predetermined value (2007), and indicates that the field is an extension of the common information field and includes two 4-bit UL SRP fields 725 and 730 that are used for an EHT TB PPDU and that are separately denoted as an EHT UL SRP 1 and an EHT UL SRP 2.

For different bandwidths, values of the EHT UL SRP 1 and the EHT UL SRP 2 may be set as follows:

When the bandwidth is 20 MHz, EHT UL SRP 1 = EHT UL SRP 2.

When the bandwidth is 40 MHz, the EHT UL SRP 1 indicates a first 20 MHz subband, and the EHT UL SRP 2 indicates a second 20 MHz subband. To avoid confusion caused by channel allocation, when the bandwidth is 2.4 GHz, EHT UL SRP 1= EHT UL SRP 2.

When the bandwidth is 80 MHz, two EHT UL SRPs each indicate any 20 MHz subband in each of two 40 MHz subbands, where values of two 20 MHz subbands in a 40 MHz subband are the same.

When the bandwidth is 160 MHz, two EHT UL SRPs each indicate any 20 MHz subband in each of two 80 MHz subbands, where values of four 20 MHz subbands in an 80 MHz subband are the same.

When the bandwidth is 320 MHz, two EHT UL SRPs each indicate any 20 MHz subband in each of two 160 MHz subbands, where values of eight 20 MHz subbands in a 160 MHz subband are the same.

The foregoing setting manner of the SRP is only a setting manner of some embodiments of this disclosure, and this disclosure is not limited thereto, but may be set in other manners.

FIG. 7B is a schematic diagram of a spatial reuse transmission process 700B according to some other embodiments of this disclosure.

Details of the same or similar parts of the transmission processes shown in FIG. 7B and FIG. 7A are not described herein again. The following mainly describes the difference between the two processes. As described above, in the process 700A shown in FIG. 7A, the STA 1 starts to perform spatial reuse transmission after receiving the HE TB PPDU 702 and/or the EHT TB PPDU 703. However, in the process 700B shown in FIG. 7B, after receiving the PSRR PPDU 701 carrying the trigger frame, the AP 2 starts to perform spatial reuse transmission. In other words, after a time point 735 in FIG. 7B, the AP 2 determines to perform spatial reuse transmission. This is irrelevant to whether the HE TB PPDU 702 or the EHT TB PPDU 703 or both are sent. In other words, in the embodiment shown in FIG. 7B, the AP 2 completes spatial reuse transmission only by using the PSRR PPDU. In some embodiments, the STA 1 may not send the HE/EHT TB PPDU, for example, when a channel of the STA 1 is busy or the STA 1 does not correctly receive the trigger frame.

FIG. 7C is a schematic diagram of a spatial reuse transmission process 700C according to some other embodiments of this disclosure.

Details of the same or similar parts of the transmission processes shown in FIG. 7C and both of FIG. 7A and FIG. 7B are not described herein again. In the process 700C, the AP 2 may determine to perform spatial reuse transmission without receiving a trigger frame from the AP 1. As shown in FIG. 7C, the AP 1 sends a PSRR PPDU 740 carrying a beacon frame. The AP 2 may obtain an RPL when obtaining the beacon frame. Then, the AP 2 may perform spatial reuse transmission after receiving an HE TB PPDU 745 and/or an EHT PPDU 750.

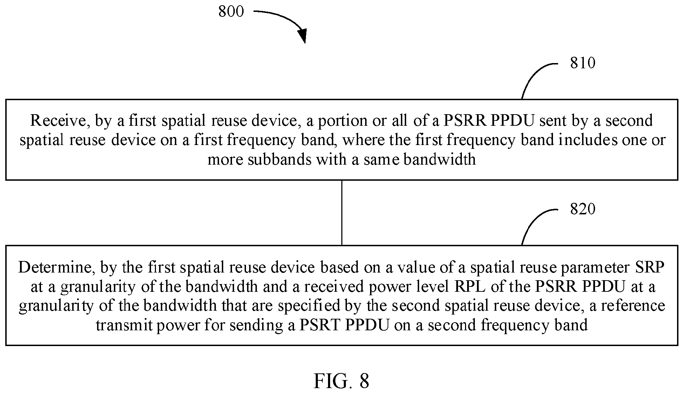

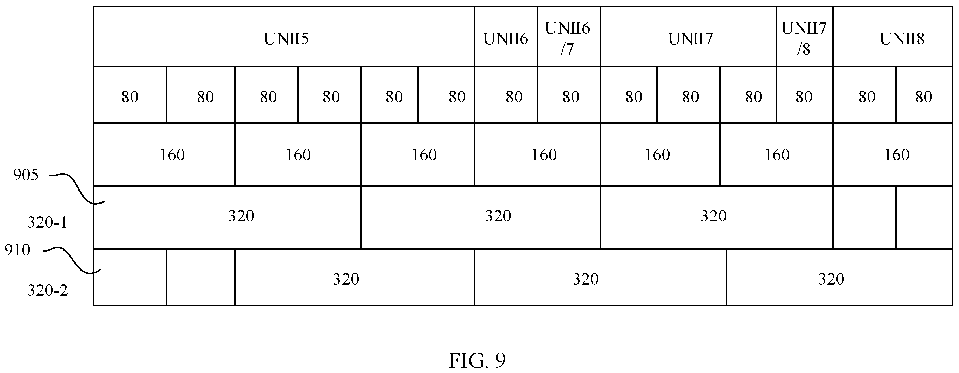

FIG. 8 is a flowchart of a spatial reuse method 800 according to some embodiments of this disclosure. The method 800 may be executed by the first spatial reuse device 602 or the second spatial reuse device 604. For ease of description, the following describes the method 800 from the perspective of the first spatial reuse device 602 with reference to FIG. 9.

In a box 810 in the method 800, the first spatial reuse device 602 receives a portion or all of a PSRR PPDU sent by the second spatial reuse device 604 on a first frequency band.

The first frequency band is an operating frequency band of the second spatial reuse device 604. A bandwidth of the first frequency band may include 20 MHz, 40 MHz, 80 MHz, 160 MHz, 320 MHz, and the like. The first frequency band includes one or more subbands (also referred to as subchannels or subblocks) with a same bandwidth. A bandwidth of the subband may also include 20 MHz, 40 MHz, 80 MHz, 160 MHz, 320 MHz, and the like. For example, if the first frequency band is 320 MHz, and the bandwidth of the subband is 20 MHz, the first frequency band includes 16 subbands. Similarly, if the first frequency band is 320 MHz, and the bandwidth of the subband is 40 MHz, the first frequency band includes eight subbands.

In different scenarios, the first spatial reuse device 602 receives the portion or all of the PSRR PPDU sent by the second spatial reuse device 604 on the first frequency band. The following provides further descriptions with reference to FIG. 9.

FIG. 9 is a schematic diagram of channel division of a bandwidth of 80/160/320 MHz in the 6 GHz band according to an embodiment of this disclosure.

As shown in FIG. 9, to effectively use a channel, two 320 MHz channels 905 and 910 are designed in the 802.11be, including a 320 MHz channel whose channel center frequency is 31/95/159 and a 320 MHz channel whose channel center frequency is 63/127/191, and denoted as 320-1 and 320-2. In FIG. 9, UNII represents the unlicensed national information infrastructure radio band (Unlicensed National Information Infrastructure (U-NII) radio band).

In an embodiment, the first spatial reuse device 602 is implemented as an AP and operates on the channel 320-2. If the first spatial reuse device 602 receives a PSRR PPDU sent by the second spatial reuse device 604 on the channel 320-1, a power received by the first spatial reuse device 602 is approximately half of an entire bandwidth (BW) of the PSRR PPDU.

For another example, in an embodiment, the first spatial reuse device 602 is implemented as a station (STA) and the STA has only a capability of 80 MHz or operates in an 80 MHz mode. When the first spatial reuse device 602 receives a PSRR PPDU whose bandwidth is 160 MHz and that is sent by the second spatial reuse device 604, the first spatial reuse device 602 can receive only one 80 MHz portion of the PSRR PPDU, and likewise receive a power that is approximately half of an entire BW of the PSRR PPDU.

It may be learned that if the first spatial reuse device 602 and the second spatial reuse device 604 operate on channels with different channel center frequencies, one spatial reuse device can receive only a portion of a PSRR PPDU sent by the other spatial reuse device. As a result, bandwidth mismatch occurs. In some embodiments of this disclosure, this problem is considered when the first spatial reuse device 602 determines a transmit power of the PSRR PPDU. Details are described below.

In some embodiments, the PSRR PPDU sent by the second spatial reuse device 604 may include a trigger frame (for example, the trigger frame 205 shown in FIG. 2). For example, the first spatial reuse device 602 may receive a PSRR PPDU that includes a trigger frame and that may be sent by the second spatial reuse device 604 to the STA 610. The trigger frame may have a format other than the format shown in FIG. 2.

As shown in a box 820 in FIG. 8, the first spatial reuse device 602 determines, based on a value of an SRP at a granularity of a subband bandwidth and an RPL of the PSRR PPDU at a granularity of the bandwidth, a reference transmit power for sending a PSRT PPDU on a second frequency band. The second frequency band is an operating frequency band of the first spatial reuse device 602, and also includes one or more subbands. A bandwidth of a subband of the second frequency band is the same as a bandwidth of a subband of the first frequency band, and the second frequency band and the first frequency band at least partially overlap. In this way, the first spatial reuse device 602 can receive the PSRR PPDU from the second spatial reuse device 604.

In some embodiments, the first spatial reuse device 602 may obtain, from the received PSRR PPDU, SRPs that are specified by the second spatial reuse device 604 for each subband and that are included in a trigger frame carried in the PSRR PPDU, and calculate the value of the SRP at the granularity of the subband bandwidth based on the SRPs. In some embodiments, a given receiver (for example, the STA 610) of the PSRR PPDU may copy, to an HE-SIG-A field in a sent HE TB PPDU, a UL SRP field in the trigger frame in the PSRR PPDU received from the second spatial reuse device 604, and/or copy an EHT UL SRP field in the received trigger frame to a U-SIG field in a sent EHT TB PPDU. Correspondingly, after receiving the HE TB PPDU and/or the EHT TB PPDU, the first spatial reuse device 602 may obtain an SRP for each subband. Then, the first spatial reuse device 602 may calculate, based on one or more of a UL SRP value and an EHT UL SRP value in the trigger frame, an SRP value in the HE TB PPDU, and an EHT SRP value in the U-SIG field, a transmit power at which the first spatial reuse device 602 sends the PSRT PPDU.

In some embodiments, as described above, the value of the SRP may be in the trigger frame in the PSRR PPDU, or may in the HE/EHT TB PPDU sent by the given receiver (for example, the STA 610) of the PSRR PPDU. In this example, if the first spatial reuse device 602 receives the PSRR PPDU sent by the second spatial reuse device 604, and obtains the RPL by using a preamble, but does not obtain the trigger frame in a data field, the first spatial reuse device 602 may obtain a BW and a PSR by using an HE/EHT TB PPDU from a STA (for example, the STA 610).

In some embodiments, the PSRR PPDU may alternatively carry a management frame (such as a beacon frame) instead of a trigger frame. In this case, the first spatial reuse device 602 may determine the RPL based on the PSRR PPDU, and obtain the value of the SRP from the HE/EHT PPDU sent by another device (for example, the STA communicating with the second spatial reuse device 604). For example, in addition to the HE/EHT TB PPDU, the HE/EHT PPDU may further include one or more of an HE multi-user (Multiple User, MU) PPDU, an EHT MU PPDU, an HE single-user (Single User, SU) PPDU, and an HE extended range (Extended Range, ER) SU PPDU. The PSRR PPDU and the HE/EHT PPDU may not be adjacent to each other in time sequence. The value of the SRP in the HE/EHT PPDU may be received from the second spatial reuse device 604. Alternatively or additionally, the value of the SRP may be an SRP value set by another device. Both the UL SRP and the EHT UL SRP represent a value on a subband (for example, a bandwidth of 20 MHz). As described above, in an existing reuse method, the value of the SRP, the RPL, and the transmit power of the PSRT PPDU are not normalized to a same bandwidth, and therefore, the calculated transmit power is not accurate enough. Therefore, for accuracy of calculation, in embodiments of this disclosure, the RPL is also normalized to a subband bandwidth, for example, 20 MHz.

In this case, in some embodiments, the transmit power of the PSRT PPDU may be determined according to the following Formula 1:

$$TxPower_{PSRT} - 10 \times \log_{10} \frac{BW_{PSRT}}{20MHz} \leq PSR_{kth,20MHz} - (RPL_{PSRR} - 10 \times \log_{10} \frac{BW_{PSRR}}{20MHz}) \quad \text{(Formula 1)}$$

Herein, $TxPower_{PSRT}$ indicates a total transmit power at which the first spatial reuse device 602 sends the PSRT PPDU, and is an example of a reference transmit power of the PSRT PPDU on the second frequency band. In this example, the reference transmit power of the PSRT PPDU is determined for the entire second frequency band. The reference transmit power of the PSRT PPDU on the entire second frequency band is determined by normalizing the entire operating frequency band to 20 MHz. In addition, $BW_{PSRT}$ indicates a bandwidth of the PSRT PPDU (namely, a bandwidth of the second frequency band), and $PSR_{kth,20MHz}$ indicates a LTL SRP corresponding to $k^{th}$ 20 MHz in the bandwidth range of the PSRR PPDU, for example, a PSR value indicated in one or more of one or more UL SRP fields in the trigger frame, one or more SRP fields in the HE-SIG-A field in the HE PPDU, one or more EHT UL SRP fields in the trigger frame, and/or one or more EHT SRP fields in the U-SIG field in the EHT PPDU. $RPL_{PSRR}$ indicates a total power of the PSRR PPDU received by the first spatial reuse device 602 in the bandwidth range of the PSRR PPDU, and $BW_{PSRR}$ indicates a bandwidth of the PSRR PPDU (namely, a bandwidth of the first frequency band).

It may be learned that in the foregoing formula, $TxPower_{PSRT}$ is normalized to 20 MHz through $TxPower_{PSRT} - 10 \times \log_{10} \frac{BW_{PSRT}}{20MHz}$, and $RPL_{PSRR}$ is normalized to 20 MHz through $RPL_{PSRR} - 10 \times \log_{10} \frac{BW_{PSRR}}{20MHz}$.

In some embodiments, the first frequency band on which the second spatial reuse device 604 operates may include a plurality of subbands, and the second spatial reuse device 604 specifies a plurality of values of the SRP for these subbands. For example, as described above, the second spatial reuse device 604 may indicate these values of the SRP by using the one or more UL SRP fields in the trigger frame, the one or more SRP fields in the HE-SIG-A field in the HE PPDU, the one or more EHT UL SRP fields in the trigger frame, and/or the one or more EHT SRP fields in the U-SIG field in the EHT PPDU. In this case, the value of the SRP at the granularity of the bandwidth may be a smallest value in the plurality of values of the SRP. For example, for each $PSR_{kth,20MHz}$, during calculation, a smallest $PSR_{kth,20MHz}$ in the BW range of the PSRR PPDU (namely, the first frequency band) may be used for calculation. Optionally, for different k, different corresponding values of the SRP may be used to calculate different $TxPower_{PSRT}$, where k = 1 ..., $BW_{PSRR}$/20 MHz.

In the foregoing embodiment, $TxPower_{PSRT}$ and $RPL_{PSRR}$ are normalized by using Formula (1), so that several variables in the inequality each indicate a value on 20 MHz. In this manner, accuracy of transmit power calculation can be improved.

As mentioned above, as shown in FIG. 9, to effectively use the channel, the two 320 MHz channels 905 and 910 are designed in the 802.11be, including the channel 320-1 whose channel center frequency is 31/95/159 and the channel 320-2 whose channel center frequency is 63/127/191. When the first spatial reuse device 602 operates on the channel 320-2 and receives a PSRR PPDU sent by the second spatial reuse device 604 on the channel 320-1, a power received by the first spatial reuse device 602 is approximately half of an entire BW of the PSRR PPDU. For another example, if the first spatial reuse device 602 is implemented as a station (STA) and the STA has only a capability of 80 MHz or operates in an 80 MHz mode, when the first spatial reuse device 602 receives a 160 MHz PSRR PPDU, the first spatial reuse device 602 can receive only one 80 MHz portion of the PSRR PPDU, and likewise receive a power that is approximately half of an entire BW of the PSRR PPDU. It may be learned that if the first spatial reuse device 602 and the second spatial reuse device 604 operate on channels with different channel center frequencies, one spatial reuse device can receive only a portion of a PSRR PPDU sent by the other spatial reuse device. This results in bandwidth mismatch.

If a width of the frequency range of the PSRR PPDU received by the first spatial reuse device 602 is not the entire bandwidth of the PSRR PPDU sent by the second spatial reuse device 604, but a portion of the bandwidth of the PSRR PPDU, a received $RPL_{PSRR}$ is smaller. According to Formula 2, a calculated $TxPower_{PSRT}$ is greater than an actually allowed value. Correspondingly, in some embodiments, the first spatial reuse device 602 may determine the RPL of the PSRR PPDU based on one or more subbands that are in the first frequency band and that are occupied by the portion or all of the received PSRR PPDU, so that bandwidth mismatch is considered during calculation of the transmit power of the PSRT PPDU. This further improves calculation accuracy of the transmit power.

The following describes a specific example of how the first spatial reuse device 602 determines, when bandwidth mismatch is considered, the reference transmit power for sending the PSRT PPDU on the second bandwidth.

In some embodiments, the first spatial reuse device 602 may determine the transmit power of the PSRT PPDU according to the following formula:

$$TxPower_{PSRT} - 10 \times \log_{10} \frac{BW_{PSRT}}{20MHz} \leq PSR_{kth,20MHz} - (RPL_{PSRR,Rx} - 10 \times \log_{10} \frac{BW_{PSRR,Rx}}{20MHz}) \quad \text{(Formula 3)}$$

Herein, $BW_{PSRR,Rx}$ indicates a frequency range of the PSRR PPDU received by the first spatial reuse device 602, and $RPL_{PSRR,Rx}$ indicates a power of the PSRR PPDU received by the first spatial reuse device 602 in the frequency range. By comparing Formula 1 with Formula 3, it may be found that in Formula 3, the parameter $RPL_{PSRR}$ in Formula 1 is replaced with the parameter $RPL_{PSRR,Rx}$, and the parameter $BW_{PSRR}$ in Formula 1 is replaced with the parameter $BW_{PSRR,Rx}$.

In Formula 3, the frequency range of the PSRR PPDU received by the first spatial reuse device 602, other than always the entire bandwidth of the PSRR PPDU, is used as a normalization parameter. Correspondingly, the power of the PSRR PPDU received by the first spatial reuse device 602 in the frequency range, other than a total power of the PSRR PPDU received by the first spatial reuse device 602 in the frequency range of the PSRR PPDU, is used for calculation. This resolves a problem caused by bandwidth mismatch, and further improves calculation accuracy of the transmit power.

In some embodiments, the RPL at the granularity of the bandwidth is determined based on an overlapping subband between the second frequency band and the one or more subbands that are in the first frequency band and that are occupied by the portion or all of the PSRR PPDU received by the first spatial reuse device 602. A specific example is described below.

In this example, in addition to $BW_{PSRR,Rx}$ and $RPL_{PSRR,Rx}$, $BW_{<PSRR,PSRT>}$ and $RPL_{<PSRR,PSRT>}$ may also be used. As shown in the following Formula 3a, $BW_{<PSRR,PSRT>}$ indicates a size of a frequency range of an overlapping region between a frequency band (namely, the second frequency band) occupied by the PSRT PPDU and a frequency band (namely, the first frequency band) occupied by the PSRR PPDU, and $RPL_{<PSRR,PSRT>}$ indicates a power that is of a PSRR PPDU and that is received in the overlapping region.

$$TxPower_{PSRT} - 10 \times \log_{10} \frac{BW_{PSRT}}{20MHz} \leq PSR_{kth,20MHz} - (RPL_{<PSRR,PSRT>} - 10 \times \log_{10} \frac{BW_{<PSRR,PSRT>}}{20MHz})$$

(Formula 3a)

In an embodiment, the first frequency band includes a plurality of subbands, and there are a plurality of values of the SRP for these subbands. When calculation is performed according to Formula 3a, for each $PSR_{kth,20MHz}$, a smallest $PSR_{kth,20MHz}$ in the overlapping region between the first frequency band and the second frequency band may be selected. Optionally, for different k, different corresponding values of the SRP may be used to calculate different $TxPower_{PSRT}$, where k = 1 ..., $BW_{<PSRR,PSRT>}$ /20 MHz.

The formula considers a case in which the PSRT PPDU and the PSRR PPDU received by the first spatial reuse device 602 have different BW ranges. For example, the overlapping region is 160 MHz, and the sent PSRT PPDU is an 80 MHz in the 160 MHz range. In this case, $BW_{<PSRR,PSRT>}$ is equal to 80 MHz, and $RPL_{<PSRR,PSRT>}$ is a power that is of the PSRR PPDU and that is received in the 80 MHz. In this way, $TxPower_{PSRT}$ can be accurately calculated.

When the BW of the PSRT PPDU is greater than the frequency range of the overlapping region between the bandwidth of the PSRT PPDU and the bandwidth of the PSRR PPDU, the frequency range of the overlapping region between the bandwidth of the PSRT PPDU and the bandwidth of the PSRR PPDU is the frequency range of the PSRR PPDU received by the first spatial reuse device 602. In this case, Formula 3 is equal to Formula 3a.

In some embodiments, the first spatial reuse device 602 and/or the second spatial reuse device 604 may perform preamble puncturing when transmitting a PPDU. Preamble puncturing indicates that a preamble and data are not transmitted on a 20 MHz subband in a bandwidth range of the PPDU, or energy is not transmitted. However, the foregoing formula always uses an entire bandwidth of the PPDU as a normalization parameter, and does not consider preamble puncturing. For example, Formula 1 may be equivalent to the following formula:

$$TxPower_{PSRT} \leq PSR_{kth,20MHz} - RPL_{PSRR} + 10 \times \log_{10} \frac{BW_{PSRR}}{20MHz} + 10 \times \log_{10} \frac{BW_{PSRT}}{20MHz} \quad \text{(Formula 2)}$$

In a case of preamble puncturing, the entire bandwidth of the PSRR PPDU and/or the PSRT PPDU is greater than an equivalent bandwidth with power transmission, which may cause an incorrect increase of $TxPower_{PSRT}$. It is assumed that a punctured portion of the preamble may occupy a maximum of 50% of the entire bandwidth of the PPDU. If the entire bandwidth of the PPDU, other than the equivalent bandwidth with power transmission, is used, the right side of the inequality is greater than an actual situation by at most 3 + 3 = 6 dB. In other words, a calculated $TxPower_{PSRT}$ is greater than an actually allowed value by at most 6 dB. The BW of the PPDU is twice the equivalent bandwidth, that is, $10 \times \log_{10} 2 \approx 3dB$.

Correspondingly, in an embodiment, the first spatial reuse device 602 or the second spatial reuse device 604 or both perform preamble puncturing on the PSRR PPDU and/or the PSRT PPDU. To further improve calculation accuracy of the transmit power, the RPL of the PSRR PPDU at the granularity of the subband bandwidth may be determined based on a non-punctured subband in the first frequency band or the second frequency band.

In some embodiments, the transmit power of the PSRT PPDU may be calculated with consideration of both overlapping and puncturing of the first frequency band and the second frequency band. For example, the RPL at the granularity of the subband bandwidth is determined based on one of the following: a bandwidth of a non-punctured subband in the one or more subbands that are in the first frequency band and that are occupied by the portion or all of the PSRR PPDU received by the first spatial reuse device 602; or a bandwidth of a non-punctured subband in an overlapping subband between the second frequency band and the one or more subbands that are in the first frequency band and that are occupied by the portion or all of the PSRR PPDU received by the first spatial reuse device 602.

Optionally or additionally, in some embodiments, the reference transmit power of the PSRT PPDU may be determined based on one of the following: a bandwidth of the non-punctured subband in the second frequency band; or a bandwidth of a non-punctured subband in an overlapping subband between the second frequency band and the one or more subbands that are in the first frequency band and that are occupied by the portion or all of the PSRR PPDU received by the first spatial reuse device 602.

The following describes a specific example of determining the reference transmit power of the PSRT PPDU with consideration of both overlapping and puncturing of the first frequency band and the second frequency band.

In some embodiments, Formula 3 may be further improved to:

$$TxPower_{PSRT} - 10 \times \log_{10} \frac{BW_{PSRT,\,non\text{-}punc}}{20MHz} \leq PSR_{kth,20MHz} - (RPL_{PSRR,Rx} - 10 \times \log_{10} \frac{BW_{PSRR,Rx,\,non\text{-}punc}}{20MHz})$$

(Formula 4)

Herein, $BW_{PSRT,non\text{-}punc}$ indicates an equivalent bandwidth other than the punctured portion, and $BW_{PSRR,Rx,non\text{-}punc}$ indicates an equivalent bandwidth other than the punctured portion in the frequency range of the received PSRR PPDU. Because no energy is transmitted in the punctured portion, $RPL_{PSRR,Rx}$ is equal to $RPL_{PSRR,Rx,non\text{-}punc}$.

Similar to some embodiments mentioned above, the frequency range of the received PSRR PPDU may also be replaced with an overlapping region of frequency bands occupied by the PSRT PPDU and the PSRR PPDU. $BW_{<PSRR,PSRT>,non\text{-}punc}$ is an equivalent bandwidth other than the punctured portion in the overlapping region between the bandwidth of the PSRT PPDU and the bandwidth of the PSRR PPDU. After puncturing is considered, Formula 3a may be expressed as:

$$TxPower_{PSRT} - 10 \times \log_{10} \frac{BW_{PSRT,\,non\text{-}punc}}{20MHz} \leq PSR_{kth,20MHz} - (RPL_{<PSRR,PSRT>} - 10 \times \log_{10} \frac{BW_{<PSRR,PSRT>,\,non\text{-}punc}}{20MHz})$$

(Formula 5)

Similarly, $RPL_{<PSRR,PSRT>}$ and $RPL_{<PSRR,PSRT>,non\text{-}punc}$ are the same.

Because the PSRT PPDU is to be sent by the first spatial reuse device 602, the first spatial reuse device 602 learns a puncturing status or an estimated puncturing status of the PSRT PPDU. For a puncturing status of the PSRR PPDU, in some embodiments, the first spatial reuse device 602 determines the non-punctured subband in the first frequency band based on at least one of the following: puncturing indication information included in a preamble in the received PSRR PPDU; puncturing indication information included in the PSRR PPDU, where the PSRR PPDU is a non-high throughput duplicate PPDU; or puncturing indication information included in a management frame of a basic service set BSS in which the second spatial reuse device 604 is located, where the management frame includes at least one of the following frames: a beacon frame, an association response frame, a probe response frame, a neighbor report frame, or a reduced neighbor report frame.

In some embodiments, the first spatial reuse device 602 may clearly learn the puncturing status of the PSRR PPDU by using a signaling indication. For example, in some embodiments, the first spatial reuse device 602 may determine the non-punctured subband in the first frequency band based on the puncturing indication information included in the preamble in the received PSRR PPDU. For example, the PSRR PPDU is an EHT multi-user (Multiple User, MU) PPDU for OFDMA transmission. Puncturing information of the PSRR PPDU is located in a resource unit allocation subfield (RU allocation subfield) of an EHT-SIG field. A resource unit allocation subfield corresponding to punctured 20 MHz indicates 26. In other words, for punctured 242-tone resource units (punctured 242-tone RU), one 20 MHz corresponds to one 242-tone RU. For another example, the PSRR PPDU is an EHT MU PPDU for non-OFDMA transmission. Puncturing information of the PSRR PPDU is located in a punctured channel information subfield of a U-SIG field.

In addition to the EHT MU PPDU, the PSRR PPDU may be further implemented as an HE PPDU, including an HE MU PPDU, an HE SU PPDU, or an HE ERSU PPDU, and a non-high throughput duplicate PPDU.

For still another example, the PSRR PPDU is an HE MU PPDU. Puncturing information of the PSRR PPDU is located in a bandwidth (BW) subfield. When the bandwidth subfield indicates 0, 1, 2, or 3, there is no puncturing, and a PPDU BW may be directly used for calculation. When the bandwidth subfield indicates 4 or 5, an entire bandwidth is 80 MHz, and one 20 MHz subband is punctured (a PPDU BW is 80 MHz, and an equivalent bandwidth is 60 MHz). When the bandwidth subfield indicates 6, an entire bandwidth is 160 MHz, one 20 MHz subband of a primary 80 MHz channel is punctured, and zero to two 20 MHz subbands of a secondary 80 MHz channel are punctured. However, a specific quantity is unclear. In this case, if $BW_{PSRT,non\text{-}punc}$ or $BW_{<PSRR,PSRT>,non\text{-}punc}$ is the primary 80 MHz channel, the first spatial reuse device 602 may clearly learn a puncturing status. Alternatively, when the bandwidth subfield indicates 7, an entire bandwidth is 160 MHz, at least one 20 MHz subband is punctured, zero, one, or two 20 MHz subbands of a primary 80 MHz channel are punctured, and zero, one, or two 20 MHz subbands of a secondary 80 MHz channel are punctured.

In some embodiments, when the PSRR PPDU is a non-high throughput duplicate (non-HT duplicate) PPDU, the PSRR PPDU may carry bandwidth and puncturing information. Specifically, the information may be located in a service field. Correspondingly, the first spatial reuse device 602 may determine the non-punctured subband in the first frequency band based on the puncturing indication information included in the PSRR PPDU.

In some other embodiments, the first spatial reuse device 602 may determine the non-punctured subband in the first frequency band based on the puncturing indication information included in the management frame of the BSS in which the second spatial reuse device 604 is located. For example, static puncturing information about which 20 MHz subbands are punctured may be carried in the management frame such as the beacon frame, the association response frame, the probe response frame, the neighbor report frame, or the reduced neighbor report frame.

For the foregoing cases, the first spatial reuse device 602 may clearly learn the puncturing status of the PSRR PPDU by using the signaling indication.

In some embodiments, the puncturing status of the PSRR PPDU may alternatively be determined through blind detection of the first spatial reuse device 602. For example, the first spatial reuse device 602 may detect whether a non-HT preamble of the PSRR PPDU exists in each 20 MHz.

In some embodiments, for a preamble puncturing problem, the first spatial reuse device 602 adjusts the reference transmit power based on a predetermined offset. This simplifies processing of the first spatial reuse device 602, and further improves calculation efficiency. In some embodiments, the predetermined offset may be set to 3 dB. As described above, when a maximum proportion of allowed puncturing is 50%, puncturing of the PSRT PPDU and puncturing of the PSRR PPDU separately cause an incorrect increase of up to 3 dB. Therefore, during calculation of $TxPower_{PSRT}$, an offset of 3 dB or 6 dB is directly subtracted. This can avoid an incorrect increase caused by puncturing of the PSRT PPDU and/or the PSRR PPDU.

In some embodiments, when calculating the reference transmit power (for example, $TxPower_{PSRT}$) of the PSRT PPDU, the first spatial reuse device 602 may adjust, based on the offset, transmit power calculation deviation caused by puncturing of the PSRR PPDU. For example, the first spatial reuse device 602 may further subtract an offset, for example, 3 dB, from $TxPower_{PSRT}$ calculated according to Formula 1/2/3/3a. Certainly, the first spatial reuse device 602 may perform adjustment based on the equivalent bandwidth if learning the puncturing status of the PSRR PPDU, and perform adjustment based on the offset if not learning the puncturing status of the PSRR PPDU. In some embodiments, if learning that the PSRR PPDU is not punctured, the first spatial reuse device 602 may not perform adjustment. In some embodiments, the first spatial reuse device 602 may always perform adjustment.

In some embodiments, the second spatial reuse device 604 may perform adjustment based on an offset when setting a UL SRP/EHT UL SRP value, to compensate for the transmit power calculation deviation caused by puncturing of the PSRR PPDU. For example, if preamble puncturing is used for the PSRR PPDU, an offset, for example, 3 dB, is further subtracted from an originally set PSR value. If the PSRR PPDU is not punctured, the second spatial reuse device 604 may not further subtract the offset. In this manner, backward compatibility may be implemented if the first spatial reuse device 602 is a conventional device. In addition, an operation of the first spatial reuse device 602 may be simplified, and the first spatial reuse device 602 does not need to consider adjustment of an offset. Certainly, for simplicity, in some embodiments, the second spatial reuse device 604 may always subtract an offset, for example, 3 dB.

In some embodiments, the first spatial reuse device 602 may perform the foregoing adjustment if the standard specifies that the second spatial reuse device 604 does not perform adjustment, or the second spatial reuse device 604 is a conventional device based on the 802.11ax. Otherwise, the second spatial reuse device 604 performs adjustment, to compensate for the transmit power calculation deviation caused by puncturing of the PSRR PPDU.

For the transmit power calculation deviation caused by puncturing of the PSRT PPDU, in some embodiments, the second spatial reuse device 604 may adjust an offset when setting the value of the SRP. For example, an offset, for example, 3 dB, is further subtracted from an originally set PSR value, to adjust the transmit power calculation deviation, for example, 3 dB, caused by puncturing of the PSRT PPDU.

In some embodiments, the first spatial reuse device 602 may alternatively adjust the offset during calculation of $TxPower_{PSRT}$. It should be noted that, because the first spatial reuse device 602 learns the puncturing status of the PSRT PPDU, the first spatial reuse device 602 may directly resolve the problem based on the puncturing status (by using a solution on the left side of Formula 4 or 4a). However, to simplify the calculation process, 3 dB may be further directly subtracted from the calculated $TxPower_{PSRT}$ (Formula 1/2/3/3a).

In some embodiments, if impact of puncturing of the PSRT PPDU and impact of puncturing of the PSRR PPDU are considered at the same time, the first spatial reuse device 602 and the second spatial reuse device 604 may separately perform corresponding offset adjustment. For example, the first spatial reuse device 602 may subtract an offset of 3 dB during calculation of $TxPower_{PSRT}$, and the second spatial reuse device 604 may subtract an offset of 3 dB when setting the value of the SRP. In some embodiments, 6 dB may alternatively be subtracted by one device.

When the reference transmit power of the PSRT PPDU on the second frequency band is calculated, in addition to the foregoing descriptions that the entire operating frequency band is normalized to the subband bandwidth (for example, 20 MHz) for the reference transmit power on the entire second frequency band, in some embodiments, the reference transmit power of the PSRT PPDU may alternatively be determined for each subband. For example, the first spatial reuse device 602 may determine, based on a value of the SRP specified by the second spatial reuse device 604 for a subband (the subband is also included in the second frequency band) in the first frequency band and the RPL of the PSRR PPDU in the subband, the reference transmit power for sending the PSRT PPDU on the subband.

A specific example is described below.

Specifically, in this example, a method for calculating the transmit power of the PSRT PPDU for each 20 MHz subband bandwidth is provided. The following formula is used:

$$TxPower_{PSRT,kth,20MHz} \leq PSR_{kth,20MHz} - RPL_{PSRR,kth,20MHz} \quad \text{(Formula 6)}$$

Herein, the range of k is in $BW_{<PSRR,PSRT>,non-punc}$. In other words, if preamble puncturing exists in the PSRR PPDU, the transmit power of the PSRT PPDU may be determined for the non-punctured subband in the first frequency band according to Formula 6. In this example, when receiving the PSRR PPDU, the first spatial reuse device 602 needs to detect a power on each 20 MHz, and needs to calculate $TxPower_{PSRT,kth,20MHz}$, at a granularity of 20 MHz.

In a case of bandwidth mismatch, for example, if no PSRR PPDU is received on 160 MHz due to the 320 MHz channels 320-1 and 320-2 shown in FIG. 9, or if a bandwidth of the PSRR PPDU is less than a bandwidth of the PSRT PPDU, or if preamble puncturing exists in the PSRR PPDU, $TxPower_{PSRT,jth,20MHz}$ on a 20 MHz subband or subchannel on which no PSRR PPDU is received may use the following rule, where j indicates a channel index of the 20 MHz on which no PSRR PPDU is received, and may be located in $BW_{<PSRR,PSRT>,punc}$.

In some embodiments, there may be no power limitation for PSR-based spatial reuse on the 20 MHz subband or subchannel (namely, a punctured subband) on which no PSRR PPDU is received. In this embodiment, the first spatial reuse device 602 may determine that a reference transmit power on the punctured subband is less than a predefined maximum transmit power. The maximum transmit power may be predefined in a system, a standard specification, or a regulation. Because no PSRR PPDU is transmitted on the subband, the HE/EHT TB PPDU triggered by the PSRR PPDU is not transmitted on the 20 MHz subband either. Therefore, the PSRT PPDU on the corresponding 20 MHz subband does not cause interference to reception of the HE/EHT TB PPDU by the second spatial reuse device 604. However, the limitation on the transmit power by the standard or regulation still exists. Therefore, a power for PSR-based spatial reuse is still restricted by regulations.

In some embodiments, PSR-based spatial reuse is not allowed on a 20 MHz subband on which no PSRR PPDU is received. Correspondingly, the first spatial reuse device 602 may determine not to allow sending the PSRT PPDU on the punctured subband. This is equivalent to that the PSRT PPDU also needs to be punctured on the 20 MHz subband punctured for the PSRR PPDU. The PSRR PPDU sent by the second spatial reuse device 604 is punctured because transmission on these 20 MHz subbands is being performed for another user, an incumbent user (incumbent user, which may be understood as a granted user), or a radar signal. For security, PSR-based spatial reuse is not performed.

In some other embodiments, the first spatial reuse device 602 determines the reference transmit power on the punctured subband as an average power of a plurality of reference transmit powers determined for a plurality of non-punctured subbands. For example, a smallest $TxPower_{PSRT,kth,20MHz}$ obtained through calculation according to Formula 6 or an average value of $TxPower_{PSRT,kth,20MHz}$ located in $BW_{<PSRR,PSRT>,non-punc}$ may be used for sending. This manner may be considered as a tradeoff between the foregoing two manners in which the transmit power is not limited and spatial reuse is not allowed. An SRP on a non-punctured 20 MHz subband on which a PSRR PPDU is received is used to determine $TxPower_{PSRT,jth,20MHz}$ of a 20 MHz subband on which the PSRR PPDU is not received (due to puncturing or bandwidth mismatch).

For example, based on Formula 6, further deduction may be performed to sum up parameters on all 20 MHz in $BW_{<PSRR,PSRT>,non-punc}$.

$$\sum_{k \in BW_{<PSRR,PSRT>,non-punc}} TxPower_{PSRT,kth,20MHz} \leq \sum_{k} PSR_{kth,20MHz} - \sum_{k} RPL_{PSRR,kth,20MHz} \quad \text{(Formula 7)}$$

Herein, $\sum_{k}$ indicates that summation is performed on all possible ks, and $\in$ indicates that all possible ks belong to a set represented by $BW_{<PSRR,PSRT>,non-punc}$.

Formula 7 is equivalent to Formula 8 or Formula 8a:

$$TxPower_{<PSRR,PSRT>,non-punc} \leq \sum_{k} PSR_{kth,20MHz} - \sum_{k} RPL_{PSRR,kth,20MHz} \quad \text{(Formula 8)}$$

$$TxPower_{<PSRR,PSRT>,non-punc} \leq \sum_{k} PSR_{kth,20MHz} - RPL_{<PSRR,PSRT>,non-punc} \quad \text{(Formula 8a)}$$

When the first spatial reuse device 602 sends the PSRT PPDU, one manner is that Formula 8/8a is met, and each 20 MHz does not need to meet Formula 6.

If there are N non-punctured 20 MHz channels in $BW_{<PSRR,PSRT>,non-punc}$, an average value of $TxPower_{PSRT,kth,20MHz}$ in $BW_{<PSRR,PSRT>,non-punc}$ is:

$$TxPowerMean_{<PSRR,PSRT>,non-punc} \leq \frac{\sum_{k} PSR_{kth,20MHz} - \sum_{k} RPL_{kth,20MHz}}{N} \quad \text{(Formula 9)}$$

In the foregoing some embodiments, a manner of calculating $TxPower_{PSRT,kth,20MHz}$ for each 20 MHz is provided. In this manner, a granularity of calculating the transmit power of the PSRT PPDU may be directly normalized to the subband bandwidth. This improves calculation accuracy.

In the foregoing some embodiments, how to accurately calculate the transmit power is described. However, embodiments of this disclosure are not limited thereto. A calculation process may alternatively be avoided by using a UL SRP field. This simplifies an operation, and improves calculation efficiency. For example, in some embodiments, the first spatial reuse device 602 may determine the reference transmit power of the PSRT PPDU on the punctured subband based on the value of the SRP on the punctured subband.

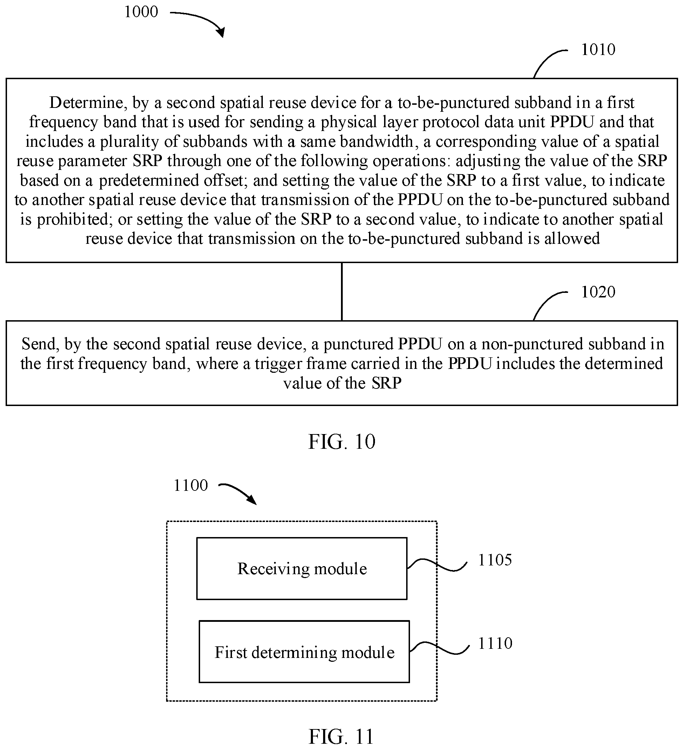

With reference to FIG. 11, the following describes how the second spatial reuse device 604 sets the UL SRP field when preamble puncturing exists in the PSRR PPDU, so that the first spatial reuse device 602 or another spatial reuse device indicates how to perform spatial reuse transmission on a punctured subband.

FIG. 10 is a flowchart of a spatial reuse method 1000 according to some other embodiments of this disclosure. The method 1000 may be performed by the second spatial reuse device 604.

In a box 1010 in the method 1000, the second spatial reuse device 604 determines, for a to-be-punctured subband in a first frequency band for sending a physical layer protocol data unit (PPDU) (for example, a PSRR PPDU), a corresponding value of a spatial reuse parameter (SRP) through one of the following operations: adjusting the value of the SRP based on a predetermined offset; and setting the value of the SRP to a first value, to indicate to another spatial reuse device that transmission of the PPDU on the to-be-punctured subband is prohibited; or setting the value of the SRP to a second value, to indicate to another spatial reuse device that transmission on the to-be-punctured subband is allowed.

As mentioned above, in some embodiments, the value of the SRP is adjusted based on the predetermined offset, so that the first spatial reuse device 602 may correspondingly adjust a transmit power of a PSRT PPDU, to compensate for transmit power calculation deviation caused by puncturing of the PSRR PPDU.

In some embodiments, if the second spatial reuse device 604 expects the first spatial reuse device 602 not to perform PSR-based spatial reuse on a 20 MHz subband or subchannel on which no PSRR PPDU is received, a UL SRP value of a UL SRP field and/or an EHT UL SRP field corresponding to the 20 MHz subchannel may be set to a specific value, for example, 0 or 15 (as shown in Table 1 below).

In some embodiments, if preamble puncturing exists in the PSRR PPDU, to simplify implementation, UL SRP values of all UL SRP fields and/or EHT UL SRP fields may be set to a specific value, for example, 0 or 15. For example, when the UL SRP values of all the UL SRP fields and/or EHT UL SRP fields are set to 0 or 5, another spatial reuse device (for example, the first spatial reuse device 602) may be indicated to prohibit transmission on a subband on which puncturing needs to be performed for the PPDU.

In this way, the first spatial reuse device 602 does not need to perform power correction for the preamble puncturing of the PSRR PPDU, and therefore the power calculation/adjustment methods in the foregoing embodiments do not need to be used.

Table 1 below illustrates an example setting of UL SRP values.

**Table 1 Description of UL SRP/EHT UL SRP fields**

| UL SRP value | Description |
|---|---|
| 0 | SRP_DISALLOW<br>SRP spatial reuse is prohibited |
| 1 | PSR = -80 dBm |

(continued)

| UL SRP value | Description |
|---|---|
| 2 | PSR = -74 dBm |
| 3 | PSR = -68 dBm |
| 4 | PSR = -62 dBm |
| 5 | PSR = -56 dBm |
| 6 | PSR = -50 dBm |
| 7 | PSR = -47 dBm |
| 8 | PSR = -44 dBm |
| 9 | PSR = -41 dBm |
| 10 | PSR = -38 dBm |
| 11 | PSR = -35 dBm |
| 12 | PSR = -32 dBm |
| 13 | PSR = -29 dBm |
| 14 | PSR $\geq$ -26 dBm |
| 15 | SRP_AND_NON-SRG_OBSS-PD_PROHIBITED<br>Spatial reuse is prohibited for SRP and non-SR group (Group) overlapping basic service set (Overlapping Basic Service Set, OBSS)-packet detection (Packet Detection). |

In some embodiments, if the second spatial reuse device 604 does not limit the PSR-based spatial reuse performed by the first spatial reuse device 602 on the 20 MHz subband on which no PSRR PPDU is received, the UL SRP value may be set to a value other than 0 or 15, for example, may be set to a PSR value of 14. As shown in Table 1, it indicates an allowed maximum PSR value.

In a box 1020, the second spatial reuse device 604 sends a punctured PPDU on a non-punctured subband in the first frequency band, where a trigger frame carried in the PPDU includes the determined value of the SRP.

An embodiment of this disclosure further provides a corresponding apparatus for implementing the foregoing method or process.

FIG. 11 is a schematic diagram of an apparatus according to some embodiments of this disclosure.

As shown in FIG. 11, the apparatus 1100 includes a receiving module 1105 and a first determining module 1110. The receiving module 1105 is configured to receive, by a first spatial reuse device 602, a portion or all of a PSRR PPDU sent by a second spatial reuse device 604 on a first frequency band, where the first frequency band includes one or more subbands with a same bandwidth. The first determining module 1110 is configured to determine, by the first spatial reuse device 602 based on a value of a spatial reuse parameter (SRP) at a granularity of the bandwidth and a received power level (RPL) of the PSRR PPDU at a granularity of the bandwidth, a reference transmit power for sending a PSRT PPDU on a second frequency band. The RPL of the PSRR PPDU at the granularity of the bandwidth is determined based on one or more of the following: one or more subbands that are in the first frequency band and that are occupied by the portion or all of the received PSRR PPDU; or a non-punctured subband in the first frequency band or the second frequency band.

In some embodiments, the reference transmit power is determined for the entire second frequency band.

In some embodiments, the RPL at the granularity of the bandwidth is determined based on an overlapping subband between the second frequency band and the one or more subbands that are in the first frequency band and that are occupied by the portion or all of the received PSRR PPDU.

In some embodiments, the RPL at the granularity of the bandwidth is determined based on one of the following: a bandwidth of a non-punctured subband in the one or more subbands that are in the first frequency band and that are occupied by the portion or all of the received PSRR PPDU; or a bandwidth of a non-punctured subband in an overlapping subband between the second frequency band and the one or more subbands that are in the first frequency band and that are occupied by the portion or all of the received PSRR PPDU.

In some embodiments, the reference transmit power is determined based on one of the following: a bandwidth of the non-punctured subband in the second frequency band; or a bandwidth of a non-punctured subband in an overlapping subband between the second frequency band and the one or more subbands that are in the first frequency band and that are occupied by the portion or all of the received PSRR PPDU.

In some embodiments, the apparatus 1100 further includes a second determining module. The second determining module is configured to determine the non-punctured subband in the first frequency band based on at least one of the following: puncturing indication information included in a preamble in the received PSRR PPDU; puncturing indication information included in the PSRR PPDU, where the PSRR PPDU is a non-high throughput duplicate PPDU; or puncturing indication information included in a management frame of a basic service set BSS in which the second spatial reuse device 604 is located, where the management frame includes at least one of the following frames: a beacon frame, an association response frame, a probe response frame, a neighbor report frame, or a reduced neighbor report frame.

In some embodiments, the apparatus 1100 further includes a third determining module, configured to determine, by the first spatial reuse device 602, to puncture the PSRT PPDU. The apparatus 1100 further includes an adjustment module, configured to adjust, by the first spatial reuse device 602, the reference transmit power based on a predetermined offset.

In some embodiments, the value of the SRP at the granularity of the bandwidth is adjusted by the second spatial reuse device 604 for a punctured PSRR PPDU based on a predetermined offset.

In some embodiments, the first frequency band includes a plurality of subbands. The value of the SRP at the granularity of the bandwidth is a smallest value in a plurality of values of the SRP for the plurality of subbands.

In some embodiments, the first determining module 1110 is configured to determine, by the first spatial reuse device 602 based on a value of the SRP for one subband in the first frequency band and the RPL of the PSRR PPDU in the subband, the reference transmit power for sending the PSRT PPDU on the subband. The subband in the first frequency band is included in the second frequency band.

In some embodiments, the first determining module 1110 is configured to: determine, by the first spatial reuse device 602 for a punctured subband in an overlapping subband between the second frequency band and the first frequency band, not to allow sending the PSRT PPDU on the punctured subband; or determine, by the first spatial reuse device 602, that a reference transmit power on the punctured subband is less than a predefined maximum transmit power.

In some embodiments, the first determining module 1110 is configured to determine, by the first spatial reuse device 602 for a punctured subband in an overlapping subband between the second frequency band and the first frequency band, a reference transmit power on the punctured subband based on one or more reference transmit powers determined for one or more non-punctured subbands in the overlapping subband between the second frequency band and the first frequency band.

In some embodiments, the first determining module 1110 is configured to determine, by the first spatial reuse device 602 for a punctured subband in an overlapping subband between the second frequency band and the first frequency band, a reference transmit power on the punctured subband based on one or more reference transmit powers determined for one or more non-punctured subbands in the overlapping subband between the second frequency band and the first frequency band.

In some embodiments, the first determining module 1110 is configured to determine, by the first spatial reuse device 602, the reference transmit power on the punctured subband as a smallest reference transmit power in the plurality of reference transmit powers determined for the plurality of non-punctured subbands or as an average power of the plurality of reference transmit powers.

In some embodiments, the first determining module 1110 is configured to determine, by the first spatial reuse device 602 for a punctured subband in an overlapping subband between the second frequency band and the first frequency band, a reference transmit power on the punctured subband based on a value of the SRP for the punctured subband.

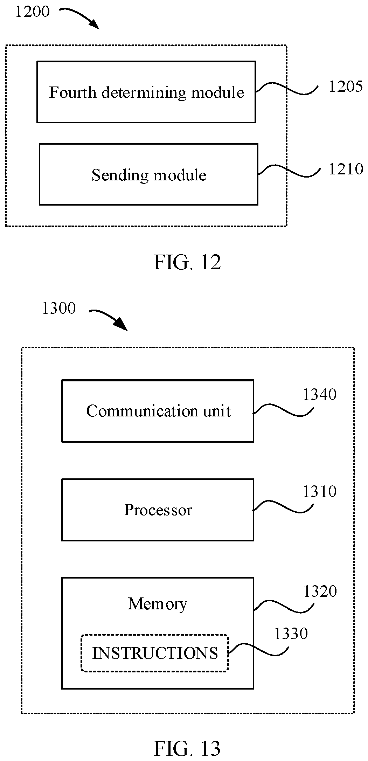

FIG. 12 is a schematic diagram of an apparatus according to some other embodiments of this disclosure.

As shown in FIG. 12, the apparatus 1200 includes a fourth determining module 1205 and a sending module 1210. The fourth determining module 1205 is configured to determine, for a to-be-punctured subband in a first frequency band that is used for sending a physical layer protocol data unit (PPDU) and that includes a plurality of subbands with a same bandwidth, a corresponding value of a spatial reuse parameter SRP through one of the following operations: adjusting the value of the SRP based on a predetermined offset; and setting the value of the SRP to a first value, to indicate to another spatial reuse device that transmission of the PPDU on the to-be-punctured subband is prohibited; or setting the value of the SRP to a second value, to indicate to another spatial reuse device that transmission on the to-be-punctured subband is allowed. The sending module 1210 is configured to send a punctured PPDU on a non-punctured subband in the first frequency band, where a trigger frame carried in the PPDU includes the determined value of the SRP.

It should be understood that the spatial reuse method described above with reference to FIG. 6 to FIG. 10 is also applicable to the apparatuses 1100 and 1200, and has same effect. Details are not described herein again. Any suitable spatial reuse technology that is currently known and will be developed in the future can be used here. The scope of this disclosure is not limited in this aspect.

The modules included in the apparatuses 1100 and 1200 may be implemented in various manners, including software, hardware, firmware, or any combination thereof. In some embodiments, one or more modules may be implemented by using software and/or firmware, for example, machine-executable instructions stored in a storage medium. In addition to or as an alternative to the machine-executable instructions, some or all of the modules in the apparatuses 1100 and 1200 may be implemented at least partially by using one or more hardware logical components. By way of example and not limitation, the available example hardware logic components include a field programmable gate array (FPGA), an application-specific integrated circuit (ASIC), an application-specific standard product (ASSP), a system on chip (SOC), and a complex programmable logic device (CPLD).

FIG. 13 is a block diagram of a device 1300 for implementing some embodiments of this disclosure. The device 1300 can be configured to implement the method procedures in FIG. 8 and FIG. 10.

As shown in FIG. 13, the device 1300 includes a processor 1310. The processor 1310 controls an operation and a function of the device 1300. For example, in some example embodiments, the processor 1310 may perform various operations by using instructions 1330 stored in a memory 1320 coupled to the processor 1310. The memory 1320 may be of any proper type applicable to a local technical environment, and may be implemented by using any suitable data storage technology, including but not limited to a semiconductor-based storage device, a magnetic storage device and system, and an optical storage device and system. Although only one memory unit is shown in FIG. 13, there may be a plurality of physically different memory units in the device 1300.

The processor 1310 may be of any proper type suitable for a local technical environment, and may include but is not limited to one or more of a general-purpose computer, a dedicated computer, a microcontroller, a digital signal processor (DSP), and a controller-based multi-core controller architecture. The device 1300 may also include a plurality of processors 1310. The processor 1310 is coupled to a communication unit 1340. The communication unit 1340 may receive and send information by using a radio signal or through an optical fiber, a cable, and/or another component.

All features described above with reference to FIG. 6 to FIG. 12 are applicable to the device 1300. Details are not described herein again.

In this embodiment of this disclosure, interference caused to reception of the spatial reuse device when the calculated transmit power of the PSRT PPDU is excessively large due to bandwidth mismatch and preamble puncturing is resolved and corrected. This reduces the interference to reception of the spatial reuse device, and improves system efficiency.

In general, the various example embodiments of this disclosure may be implemented in hardware or dedicated circuitry, software, logic, or any combination thereof. Some aspects may be implemented in hardware, while other aspects may be implemented in firmware or software that may be executed by a controller, a microprocessor, or another computing device. When aspects of the example embodiments of this disclosure are illustrated or described as block diagrams, flowcharts, or represented using certain other figures, it will be understood that the blocks, apparatuses, systems, techniques, or methods described herein may be implemented as non-limiting examples in hardware, software, firmware, dedicated circuitry or logic, general-purpose hardware or controllers, or other computing devices, or some combinations thereof.

For example, the example embodiments of this disclosure may be described in a context of machine-executable or computer-executable instructions. The machine-executable instructions are, for example, a program module executed in a device included in a real or virtual processor of a target. Generally, a program module includes a routine, a program, a library, an object, a class, a component, a data structure, and the like, and executes a specific task or implements a specific abstract data structure. In various example embodiments, functions of program modules may be combined or split between the described program modules. The machine-executable instructions for a program module may be executed locally or within a distributed device. In a distributed device, program modules may be located both locally and in a remote storage medium.

Computer program code used to implement the methods disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed completely on a computer, partially on a computer, as an independent software package, partially on a computer and partially on a remote computer, or completely on a remote computer or server.

In the context of this disclosure, a machine-readable medium or a computer-readable medium may be any tangible medium that includes or stores a program for or has a program related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any suitable combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

In addition, while operations are depicted in a particular order, this should not be understood as requiring such operations to be completed in the particular order shown or in a successive order, or performing all the illustrated operations to obtain the desired results. In some cases, multitasking or parallel processing may be advantageous. Similarly, while the foregoing descriptions include some specific implementation details, this should not be construed as limiting the scope of any invention or claims, but rather as a description of specific example embodiments that may be specific to a particular invention. Some features described in this specification in the context of separate example embodiments may alternatively be integrated into a single example embodiment. Conversely, various features that are described in the context of a single example embodiment may alternatively be implemented separately in multiple example embodiments or in any suitable sub-combination.

Although the subject matter has been described in language specific to structural features and/or methodological acts, it should be understood that the subject matter defined in the appended claims is not limited to the specific features or acts described above. Rather, the specific features and acts described above are disclosed as example forms of implementing the claims.

## Claims

1. A spatial reuse method, comprising:

   receiving, by a first spatial reuse device, a portion or all of a PSRR PPDU sent by a second spatial reuse device on a first frequency band, wherein the first frequency band comprises one or more subbands with a same bandwidth; and

   determining, by the first spatial reuse device based on a value of a spatial reuse parameter SRP at a granularity of the bandwidth and a received power level RPL of the PSRR PPDU at a granularity of the bandwidth, a reference transmit power for sending a PSRT PPDU on a second frequency band, wherein

   the second frequency band comprises one or more subbands with the bandwidth, and the second frequency band and the first frequency band at least partially overlap; and

   the RPL of the PSRR PPDU at the granularity of the bandwidth is determined based on one or more of the following:

   one or more subbands that are in the first frequency band and that are occupied by the portion or all of the PSRR PPDU received by the first spatial reuse device; or

   a non-punctured subband in the first frequency band or the second frequency band.

2. The method according to claim 1, wherein the reference transmit power is determined for the entire second frequency band.

3. The method according to claim 2, wherein the RPL at the granularity of the bandwidth is determined based on an overlapping subband between the second frequency band and the one or more subbands that are in the first frequency band and that are occupied by the portion or all of the PSRR PPDU received by the first spatial reuse device.

4. The method according to claim 2, wherein the RPL at the granularity of the bandwidth is determined based on one of the following:

   a bandwidth of a non-punctured subband in the one or more subbands that are in the first frequency band and that are occupied by the portion or all of the PSRR PPDU received by the first spatial reuse device; or

   a bandwidth of a non-punctured subband in an overlapping subband between the second frequency band and the one or more subbands that are in the first frequency band and that are occupied by the portion or all of the PSRR PPDU received by the first spatial reuse device.

5. The method according to claim 2, wherein the reference transmit power is determined based on one of the following:

   a bandwidth of the non-punctured subband in the second frequency band; or

   a bandwidth of a non-punctured subband in an overlapping subband between the second frequency band and the one or more subbands that are in the first frequency band and that are occupied by the portion or all of the PSRR PPDU received by the first spatial reuse device.

**6.** The method according to claim 1, further comprising:
determining, by the first spatial reuse device, the non-punctured subband in the first frequency band based on at least one of the following:

puncturing indication information comprised in a preamble in the received PSRR PPDU;
puncturing indication information comprised in the PSRR PPDU, wherein the PSRR PPDU is a non-high throughput duplicate PPDU; or
puncturing indication information comprised in a management frame of a basic service set BSS in which the second spatial reuse device is located, wherein the management frame comprises at least one of the following frames: a beacon frame, an association response frame, a probe response frame, a neighbor report frame, or a reduced neighbor report frame.

**7.** The method according to claim 1, wherein the first spatial reuse device determines to puncture the PSRT PPDU, and the method further comprises:
adjusting, by the first spatial reuse device, the reference transmit power based on a predetermined offset.

**8.** The method according to claim 1, wherein the value of the SRP at the granularity of the bandwidth is adjusted by the second spatial reuse device for a punctured PSRR PPDU based on a predetermined offset.

**9.** The method according to claim 1, wherein the first frequency band comprises a plurality of subbands, and the value of the SRP at the granularity of the bandwidth is a smallest value in a plurality of values of the SRP for the plurality of subbands.

**10.** The method according to claim 1, wherein the determining a reference transmit power for sending a PSRT PPDU on a second frequency band comprises:
determining, by the first spatial reuse device based on a value of the SRP for one subband in the first frequency band and the RPL of the PSRR PPDU in the subband, the reference transmit power for sending the PSRT PPDU on the subband, wherein the subband in the first frequency band is comprised in the second frequency band.

**11.** The method according to claim 10, further comprising:

determining, by the first spatial reuse device for a punctured subband in an overlapping subband between the second frequency band and the first frequency band, not to allow sending the PSRT PPDU on the punctured subband; or
determining, by the first spatial reuse device, that a reference transmit power on the punctured subband is less than a predefined maximum transmit power.

**12.** The method according to claim 10, further comprising:
determining, by the first spatial reuse device for a punctured subband in an overlapping subband between the second frequency band and the first frequency band, a reference transmit power on the punctured subband based on one or more reference transmit powers determined for one or more non-punctured subbands in the overlapping subband between the second frequency band and the first frequency band.

**13.** The method according to claim 12, wherein the determining a reference transmit power on the punctured subband comprises:
determining, by the first spatial reuse device, the reference transmit power on the punctured subband as a smallest reference transmit power in the plurality of reference transmit powers determined for the plurality of non-punctured subbands or as an average power of the plurality of reference transmit powers.

**14.** The method according to claim 10, further comprising:
determining, by the first spatial reuse device for a punctured subband in an overlapping subband between the second frequency band and the first frequency band, a reference transmit power on the punctured subband based on a value of the SRP for the punctured subband.

**15.** A spatial reuse method, comprising:
determining, by a second spatial reuse device for a to-be-punctured subband in a first frequency band that is used for sending a physical layer protocol data unit PPDU and that comprises a plurality of subbands with a same bandwidth, a corresponding value of a spatial reuse parameter SRP through one of the following operations:

adjusting the value of the SRP based on a predetermined offset; and

setting the value of the SRP to a first value, to indicate to another spatial reuse device that transmission of the PPDU on the to-be-punctured subband is prohibited; or

setting the value of the SRP to a second value, to indicate to another spatial reuse device that transmission on the to-be-punctured subband is allowed; and

sending, by the second spatial reuse device, a punctured PPDU on a non-punctured subband in the first frequency band, wherein a trigger frame carried in the PPDU comprises the determined value of the SRP.

**16.** A communication apparatus, comprising:

a receiving module, configured to receive, by a first spatial reuse device, a portion or all of a PSRR PPDU sent by a second spatial reuse device on a first frequency band, wherein the first frequency band comprises one or more subbands with a same bandwidth; and

a first determining module, configured to determine, by the first spatial reuse device based on a value of a spatial reuse parameter SRP at a granularity of the bandwidth and a received power level RPL of the PSRR PPDU at a granularity of the bandwidth, a reference transmit power for sending a PSRT PPDU on a second frequency band, wherein

the second frequency band comprises one or more subbands with the bandwidth, and the second frequency band and the first frequency band at least partially overlap; and

the RPL of the PSRR PPDU at the granularity of the bandwidth is determined based on one or more of the following:

one or more subbands that are in the first frequency band and that are occupied by the portion or all of the received PSRR PPDU; or

a non-punctured subband in the first frequency band or the second frequency band.

**17.** The communication apparatus according to claim 16, wherein the reference transmit power is determined for the entire second frequency band.

**18.** The communication apparatus according to claim 17, wherein the RPL at the granularity of the bandwidth is determined based on an overlapping subband between the second frequency band and the one or more subbands that are in the first frequency band and that are occupied by the portion or all of the received PSRR PPDU.

**19.** The communication apparatus according to claim 17, wherein the RPL at the granularity of the bandwidth is determined based on one of the following:

a bandwidth of a non-punctured subband in the one or more subbands that are in the first frequency band and that are occupied by the portion or all of the received PSRR PPDU; or

a bandwidth of a non-punctured subband in an overlapping subband between the second frequency band and the one or more subbands that are in the first frequency band and that are occupied by the portion or all of the received PSRR PPDU.

**20.** The communication apparatus according to claim 17, wherein the reference transmit power is determined based on one of the following:

a bandwidth of the non-punctured subband in the second frequency band; or

a bandwidth of a non-punctured subband in an overlapping subband between the second frequency band and the one or more subbands that are in the first frequency band and that are occupied by the portion or all of the received PSRR PPDU.

**21.** The communication apparatus according to claim 16, further comprising:

a second determining module, configured to determine, by the first spatial reuse device, the non-punctured subband in the first frequency band based on at least one of the following:

puncturing indication information comprised in a preamble in the received PSRR PPDU;

puncturing indication information comprised in the PSRR PPDU, wherein the PSRR PPDU is a non-high throughput duplicate PPDU; or

puncturing indication information comprised in a management frame of a basic service set BSS in which the second spatial reuse device is located, wherein the management frame comprises at least one of the following frames: a beacon frame, an association response frame, a probe response frame, a neighbor report frame, or a reduced neighbor report frame.

22. The communication apparatus according to claim 16, further comprising:

a third determining module, configured to determine, by the first spatial reuse device, to puncture the PSRT PPDU; and
an adjustment module, configured to adjust, by the first spatial reuse device, the reference transmit power based on a predetermined offset.

23. The communication apparatus according to claim 16, wherein the value of the SRP at the granularity of the bandwidth is adjusted by the second spatial reuse device for a punctured PSRR PPDU based on a predetermined offset.

24. The communication apparatus according to claim 16, wherein the first frequency band comprises a plurality of subbands, and the value of the SRP at the granularity of the bandwidth is a smallest value in a plurality of values of the SRP for the plurality of subbands.

25. The communication apparatus according to claim 16, wherein the first determining module is configured to:
determine, by the first spatial reuse device based on a value of the SRP for one subband in the first frequency band and the RPL of the PSRR PPDU in the subband, the reference transmit power for sending the PSRT PPDU on the subband, wherein the subband in the first frequency band is comprised in the second frequency band.

26. The communication apparatus according to claim 25, wherein the first determining module is configured to:

determine, by the first spatial reuse device for a punctured subband in an overlapping subband between the second frequency band and the first frequency band, not to allow sending the PSRT PPDU on the punctured subband; or
determine, by the first spatial reuse device, that a reference transmit power on the punctured subband is less than a predefined maximum transmit power.

27. The communication apparatus according to claim 25, wherein the first determining module is configured to:
determine, by the first spatial reuse device for a punctured subband in an overlapping subband between the second frequency band and the first frequency band, a reference transmit power on the punctured subband based on one or more reference transmit powers determined for one or more non-punctured subbands in the overlapping subband between the second frequency band and the first frequency band.

28. The communication apparatus according to claim 27, wherein the first determining module is configured to:
determine, by the first spatial reuse device, the reference transmit power on the punctured subband as a smallest reference transmit power in the plurality of reference transmit powers determined for the plurality of non-punctured subbands or as an average power of the plurality of reference transmit powers.

29. The communication apparatus according to claim 25, wherein the first determining module is configured to:
determine, by the first spatial reuse device for a punctured subband in an overlapping subband between the second frequency band and the first frequency band, a reference transmit power on the punctured subband based on a value of the SRP for the punctured subband.

30. A communication apparatus, comprising:
a fourth determining module, configured to determine, for a to-be-punctured subband in a first frequency band that is used for sending a physical layer protocol data unit PPDU and that comprises a plurality of subbands with a same bandwidth, a corresponding value of a spatial reuse parameter SRP through one of the following operations:

adjusting the value of the SRP based on a predetermined offset;
setting the value of the SRP to a first value, to indicate to another spatial reuse device that transmission of the PPDU on the to-be-punctured subband is prohibited; or
setting the value of the SRP to a second value, to indicate to another spatial reuse device that transmission on the to-be-punctured subband is allowed; and
a sending module, configured to send a punctured PPDU on a non-punctured subband in the first frequency band, wherein a trigger frame carried in the PPDU comprises the determined value of the SRP.

31. A communication device, comprising:
a processor, wherein the processor is coupled to a memory, the memory stores instructions, and when the instructions are executed by the processor, the method according to claims 1 to 14 or claim 15 is performed.

32. A computer-readable storage medium, wherein the computer-readable storage medium stores a program, and when at least part of the program is executed by a processor in a device, the device is enabled to perform the method according to claims 1 to 14 or claim 15.

FIG. 1

HE TB PPDU 210

Acknowledgment frame — 215

| Packet extension PE | Packet extension PE | | Packet extension PE |
| Data (Data) (STA 1) | Data (Data) (STA 2) | ... | Data (Data) (STA 4) |
| High efficiency long training field (HE-LTF) | High efficiency long training field (HE-LTF) | | High efficiency long training field (HE-LTF) |
| High efficiency short training field (HE-STF) | High efficiency short training field (HE-STF) | | High efficiency short training field (HE-STF) |

High efficiency signal field A (HE-SIG-A) — 220

Repeated legacy signal field (RL-SIG)

Legacy signal field (L-SIG)

Legacy long training field (L-LTF)

Legacy short training field (L-STF)

Trigger frame (Trigger frame) — 205

HE SU PPDU

Packet extension PE

Data (Data) (STA 1)

High efficiency long training field (HE-LTF)

High efficiency short training field (HE-STF)

High efficiency signal field A (HE-SIG-A)

Repeated legacy signal field (RL-SIG)

Legacy signal field (L-SIG)

Legacy long training field (L-LTF)

Legacy short training field (L-STF)

FIG. 2

EP 4 210 401 A1

205

305  315  User information list field  310
(User Info List)

| FC (frame control) | Duration (Duration) | Receiver address (RA) | Transmitter address (TA) | Common information (Common Info) | User information (user info) | User information (user info) | ... | User information (user info) | Padding (padding) | Frame check sequence (FCS) |
|---|---|---|---|---|---|---|---|---|---|---|

FIG. 3

420 → Common information field 305      315 → User information list field 310

| Trigger Type Trigger type | UL Length Uplink length | More TF More trigger frame | CS Required Carrier sense required | UL Bandwidth Uplink bandwidth | GI And HE-LTF Type Guard interval + HE-LTF type | MU-MIMO HE-LTF Mode Mode | Number of HE-LTF Symbols And Midamble Periodicity Number of HE-LTF symbols and midamble periodicity | UL STBC Uplink space-time block coding |
|---|---|---|---|---|---|---|---|---|

| User Info (STA 1) User information | ... | User Info (STA M) |
|---|---|---|

| LDPC Extra Symbol Segment | AP TX Power AP transmit power | Pre-FEC Padding Factor Pre-FEC padding factor | PE Disambiguity Packet extension disambiguity | UL Spatial Reuse Uplink spatial reuse | Doppler Doppler | UL HE-SIG-A2 Reserved Uplink HE-SIG-A2 reserved | Reserved Reserved | Trigger dependent common information Trigger Dependent User Info |
|---|---|---|---|---|---|---|---|---|

Low-density parity-check extra symbol segment      405

| AID 12 Association identifier | RU Allocation Resource unit allocation | UL FEC Coding Type Uplink forward error correction coding type | UL HE-MCS Modulation and coding scheme | UL DCM Uplink dual carrier modulation | SS Allocation/RA-RU Information Spatial stream allocation/Random access RU information | UL Target RSSI Uplink target received signal strength indication | Reserved Reserved | Trigger dependent station information Trigger Dependent User Info |
|---|---|---|---|---|---|---|---|---|

410      415

FIG. 4

PSRR PPDU: parameterized spatial reuse reception physical layer protocol data unit
PSRT PPDU: parameterized spatial reuse transmission physical layer protocol data unit
HE TB PPDU: high efficiency trigger-based physical layer protocol data unit

FIG. 5

FIG. 6

700A

Duration from common information
field (Duration from common
information field)

701

AP 1 | PSRR PPDU

Time

702
HE TB PPDU

703
STA 1 | EHT TB PPDU

Time

AP 2 | PSRT PPDU

Time

PHY-CCARESET.request
(Physical layer.Clear channel
assessment reset.Request)

Block Ack
(Block ack)

STA 2

Time

PSRR PPDU: parameterized spatial reuse reception physical layer protocol data unit
PSRT PPDU: parameterized spatial reuse transmission physical layer protocol data unit
HE/EHT TB PPDU: high efficiency/extremely high throughput trigger-based physical
layer protocol data unit

FIG. 7A

700B

Duration from common information
field (Duration from common
information field)

701

AP 1 | PSRR PPDU |

————————————————→ Time

735

702

| HE TB PPDU |

703

STA 1 | EHT TB PPDU |

————————————————→ Time

PHY-CCARESET.request
(Physical layer.Clear channel
assessment reset.Request)

AP 2 | PSRT PPDU |

————————————————→ Time

| Block Ack
(Block ack) |

STA 2 ————————————————→ Time

PSRR PPDU: parameterized spatial reuse reception physical layer protocol data unit
PSRT PPDU: parameterized spatial reuse transmission physical layer protocol data unit
HE/EHT TB PPDU: high efficiency/extremely high throughput trigger-based physical
layer protocol data unit

FIG. 7B

700C

Carry a
beacon frame

AP 1 | PSRR PPDU | 740 ... Time

STA 1 ... HE PPDU 745 / EHT PPDU 750 Time

AP 2 ... PSRT PPDU Time

Obtain
an RPL

PHY-CCARESET.request
(Physical layer.Clear channel
assessment reset.Request)

Block Ack
(Block ack)

STA 2 ... Time

PSRR PPDU: parameterized spatial reuse reception physical layer protocol data unit
PSRT PPDU: parameterized spatial reuse transmission physical layer protocol data unit
HE/EHT PPDU: high efficiency/extremely high throughput physical layer protocol data unit

FIG. 7C

EP 4 210 401 A1

FIG. 7D

715

User information list field
(user information list field)

User Info 1
User information

...

User Info N

705

Common information field
(common information field)

710

4 bits
(HE) UL SRP 1
Uplink spatial reuse parameter 1

4 bits
UL SRP 2
Uplink spatial reuse parameter 2

4 bits
UL SRP 3
Uplink spatial reuse parameter 3

4 bits
UL SRP 4
Uplink spatial reuse parameter 4

720

4 bits
AID 12(AID 12 = 2007) Association identifier 12

...

725

4 bits
EHT UL SRP 1

730

4 bits
EHT UL SRP 2

...

800 —

810

Receive, by a first spatial reuse device, a portion or all of a PSRR PPDU sent by a second spatial reuse device on a first frequency band, where the first frequency band includes one or more subbands with a same bandwidth

820

Determine, by the first spatial reuse device based on a value of a spatial reuse parameter SRP at a granularity of the bandwidth and a received power level RPL of the PSRR PPDU at a granularity of the bandwidth that are specified by the second spatial reuse device, a reference transmit power for sending a PSRT PPDU on a second frequency band

FIG. 8

EP 4 210 401 A1

| UNII5 | | | | | | UNII6 | UNII6 /7 | UNII7 | | UNII7 /8 | UNII8 | |
|---|---|---|---|---|---|---|---|---|---|---|---|---|
| 80 | 80 | 80 | 80 | 80 | 80 | 80 | 80 | 80 | 80 | 80 | 80 | 80 | 80 |
| 160 | | 160 | | 160 | | 160 | | 160 | | 160 | | 160 | |
| 320 | | | | | | 320 | | | 320 | | | | |
| | | 320 | | | | | 320 | | | | 320 | | |

905

320-1

910

320-2

FIG. 9

1000

1010

Determine, by a second spatial reuse device for a to-be-punctured subband in a first frequency band that is used for sending a physical layer protocol data unit PPDU and that includes a plurality of subbands with a same bandwidth, a corresponding value of a spatial reuse parameter SRP through one of the following operations: adjusting the value of the SRP based on a predetermined offset; and setting the value of the SRP to a first value, to indicate to another spatial reuse device that transmission of the PPDU on the to-be-punctured subband is prohibited; or setting the value of the SRP to a second value, to indicate to another spatial reuse device that transmission on the to-be-punctured subband is allowed

1020

Send, by the second spatial reuse device, a punctured PPDU on a non-punctured subband in the first frequency band, where a trigger frame carried in the PPDU includes the determined value of the SRP

FIG. 10

1100

Receiving module                1105

First determining module        1110

FIG. 11

1200

Fourth determining module — 1205

Sending module — 1210

FIG. 12

1300

Communication unit — 1340

Processor — 1310

Memory — 1320

INSTRUCTIONS — 1330

FIG. 13

## INTERNATIONAL SEARCH REPORT

| International application No. |
| --- |
| **PCT/CN2022/078013** |

**A.    CLASSIFICATION OF SUBJECT MATTER**

H04W 52/24(2009.01)i

According to International Patent Classification (IPC) or to both national classification and IPC

**B.    FIELDS SEARCHED**

Minimum documentation searched (classification system followed by classification symbols)

H04W; H04Q; H04L; H04B

Documentation searched other than minimum documentation to the extent that such documents are included in the fields searched

Electronic data base consulted during the international search (name of data base and, where practicable, search terms used)

CNTXT; WPABSC; WPABS; ENTXT; ENTXTC; 3GPP; CJFD: 空间复用, 复用, 重用, 基本服务集, 重叠基本服务集, 空间复用参数, 接收功率水平, 功率, 数据单元, 触发, 重叠, 指示, 无线局域网, 802.11, 归一化, 打孔, 开孔, 凿孔, 偏置, 偏移, 补偿, spatial reuse, reuse, multiplex, BSS, OBSS, SRP, RPL, power, PPDU, trigg+, overlap, indicat+, WLAN, normalized, punctur+, offset, compensat+

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 108353425 A (WILUS INSTITUTE OF STANDARDS AND TECHNOLOGY INC.) 31 July 2018 (2018-07-31) <br> paragraphs [0058]-[0185] | 1-14, 16-29, 31-32 |
| Y | US 2017325202 A1 (QUALCOMM INC.) 09 November 2017 (2017-11-09) <br> paragraphs [0006]-[0125] | 1-14, 16-29, 31-32 |
| A | CN 108353425 A (WILUS INSTITUTE OF STANDARDS AND TECHNOLOGY INC.) 31 July 2018 (2018-07-31) <br> paragraphs [0058]-[0185] | 15, 30 |
| A | US 2017325202 A1 (QUALCOMM INC.) 09 November 2017 (2017-11-09) <br> paragraphs [0006]-[0125] | 15, 30 |
| A | CN 108271263 A (ZTE CORP.) 10 July 2018 (2018-07-10) <br> entire document | 1-32 |
| A | CN 106961733 A (HUAWEI TECHNOLOGIES CO., LTD.) 18 July 2017 (2017-07-18) <br> entire document | 1-32 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 May 2022** | **13 May 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2022/078013** |

**C.    DOCUMENTS CONSIDERED TO BE RELEVANT**

| Category* | Citation of document, with indication, where appropriate, of the relevant passages | Relevant to claim No. |
|---|---|---|
| A | CN 110140374 A (WILUS INST STANDARDS & TECHNOLOGY INC; SK TELECOMMUNICATIONS CO., LTD.) 16 August 2019 (2019-08-16)<br>    entire document | 1-32 |

**INTERNATIONAL SEARCH REPORT**
Information on patent family members

International application No.

**PCT/CN2022/078013**

| Patent document cited in search report | | | Publication date (day/month/year) | Patent family member(s) | | | Publication date (day/month/year) |
|---|---|---|---|---|---|---|---|
| CN | 108353425 | A | 31 July 2018 | CN | 113950137 | A | 18 January 2022 |
| | | | | US | 2020359417 | A1 | 12 November 2020 |
| | | | | KR | 20220031140 | A | 11 March 2022 |
| | | | | KR | 20220028190 | A | 08 March 2022 |
| | | | | US | 2018249501 | A1 | 30 August 2018 |
| | | | | WO | 2017078442 | A1 | 11 May 2017 |
| | | | | CN | 113950139 | A | 18 January 2022 |
| | | | | KR | 20180064454 | A | 14 June 2018 |
| | | | | CN | 113950138 | A | 18 January 2022 |
| | | | | US | 2020359416 | A1 | 12 November 2020 |
| US | 2017325202 | A1 | 09 November 2017 | KR | 20190004282 | A | 11 January 2019 |
| | | | | JP | 2019515566 | A | 06 June 2019 |
| | | | | US | 2017325178 | A1 | 09 November 2017 |
| | | | | EP | 3453217 | A2 | 13 March 2019 |
| | | | | BR | 112018072786 | A2 | 12 March 2019 |
| | | | | TW | 201743654 | A | 16 December 2017 |
| | | | | CA | 3019844 | A1 | 09 November 2017 |
| | | | | CN | 109076596 | A | 21 December 2018 |
| | | | | US | 2019166590 | A1 | 30 May 2019 |
| CN | 108271263 | A | 10 July 2018 | US | 2019327741 | A1 | 24 October 2019 |
| | | | | EP | 3565334 | A1 | 06 November 2019 |
| CN | 106961733 | A | 18 July 2017 | WO | 2017121301 | A1 | 20 July 2017 |
| | | | | US | 2018324596 | A1 | 08 November 2018 |
| | | | | EP | 3393189 | A1 | 24 October 2018 |
| CN | 110140374 | A | 16 August 2019 | JP | 2022050598 | A | 30 March 2022 |
| | | | | US | 2022029669 | A1 | 27 January 2022 |
| | | | | CN | 113300744 | A | 24 August 2021 |
| | | | | US | 2019334590 | A1 | 31 October 2019 |
| | | | | US | 2020195314 | A1 | 18 June 2020 |
| | | | | WO | 2018128530 | A1 | 12 July 2018 |
| | | | | JP | 2020504570 | A | 06 February 2020 |
| | | | | KR | 20200034756 | A | 31 March 2020 |
| | | | | JP | 2022050597 | A | 30 March 2022 |
| | | | | CN | 113193884 | A | 30 July 2021 |
| | | | | US | 2020204223 | A1 | 25 June 2020 |
| | | | | KR | 20190097102 | A | 20 August 2019 |
| | | | | KR | 20210064425 | A | 02 June 2021 |
| | | | | KR | 20200033915 | A | 30 March 2020 |
| | | | | CN | 113193885 | A | 30 July 2021 |
| | | | | EP | 3567911 | A1 | 13 November 2019 |

Form PCT/ISA/210 (patent family annex) (January 2015)